Europäisches Patentamt

(19) European Patent Office

Office européen des brevets

(11) Numéro de publication: **0 228 329**
**B1**

(12) **FASCICULE DE BREVET EUROPEEN**

(45) Date de publication du fascicule du brevet:
04.07.90

(21) Numéro de dépôt: **86402736.2**

(22) Date de dépôt: **09.12.86**

(51) Int. Cl.⁵: **G06F 12/14**

(54) Dispositif électronique formant mémoire stable rapide perfectionnée.

(30) Priorité: **12.12.85 FR 8518437**

(43) Date de publication de la demande:
**08.07.87 Bulletin 87/28**

(45) Mention de la délivrance du brevet:
**04.07.90 Bulletin 90/27**

(84) Etats contractants désignés:
**AT BE CH DE ES FR GB GR IT LI LU NL SE**

(56) Documents cités:
**FR-A- 2 553 541**

**COMMUNICATIONS OF THE ACM,
vol. 11, no. 11, novembre 1968, pages 741-746, New
York, US; J.G. JODEIT: "Storage organization in
programming systems"**

(73) Titulaire: **INRIA INSTITUT NATIONAL DE RECHERCHE
EN INFORMATIQUE ET EN AUTOMATIQUE, Domaine de
Voluceau, Rocquencourt F-78150 Le Chesnay(FR)**

(72) Inventeur: **Banatre, Michel Pierre, La Masse, F-35111 La
Fresnais(FR)**
Inventeur: **Banatre, Jean-Pierre Auguste, La Masse,
F-35111 La Fresnais(FR)**
Inventeur: **Muller, Gilles Marc, 127, Avenue Aristide
Briand, F-35000 Rennes(FR)**
Inventeur: **Ployette, Florimond Etienne, 45, rue Saint
Melaine, F-35000 Rennes(FR)**

(74) Mandataire: **Plaçais, Jean-Yves et al, Cabinet
Netter, 40, rue Vignon, F-75009 Paris(FR)**

## Description

L'invention concerne les mémoires électroniques.

Dans la Demande de brevet français No 83 16488, publiée sous le No 2 553 541, le Demandeur a décrit un dispositif électronique formant mémoire stable rapide, et comprenant : des lignes ou interfaces d'adresse, d'entrée-sortie de données et d'instructions d'écriture et lecture, susceptibles d'être connectées à un processeur extérieur; un premier et un second ensembles indépendants de mémoires vives non volatiles, possédant des entrées d'adresse, des entrées de commande d'écriture-lecture, et des entrées-sorties de données; et des moyens de contrôle d'accès reliés d'une part aux interfaces d'adresse ainsi que de commande d'écriture/lecture, d'autre part aux entrées d'adresse et de commande d'écriture/lecture des deux ensembles de mémoires, afin de n'autoriser l'accès qu'à une partie désignée des deux ensembles de mémoires, à chaque fois pour une opération désignée de lecture ou d'écriture, l'autorisation étant détruite après l'adressage de cette partie de mémoire.

Quoiqu'elle ait pu donner satisfaction, notamment dans une application à un système informatique distribué pour la conduite d'enchères publiques, la mémoire stable rapide antérieure possédait certains inconvénients.

L'un de ces inconvénients est le fait que la zone élémentaire protégée dans la mémoire, vue du processeur, restait très liée à la structure matérielle de la mémoire, c'est-à-dire à sa décomposition en mots et en bits.

Un autre inconvénient, partiellement lié au premier, résidait en ce qu'une partie des contrôles nécessaires à la stabilité de la mémoire était assurée par logiciel, et à certains égards confiée au processeur utilisateur de ladite mémoire.

De plus, la reprise en cas d'anomalie non rectifiable dans la mémoire était entièrement laissée à la charge du processeur utilisateur.

La présente invention vient perfectionner la mémoire stable rapide antérieure, dans le but de remédier à ces inconvénients.

Il est précisé dès maintenant que la présente invention va fournir un module ou carte de mémoire stable, comportant des éléments de mémoire proprement dits et d'autres éléments. C'est cet ensemble que l'on appellera maintenant "mémoire stable".

Un premier but de la présente invention est de faire en sorte que l'atomicité des opérations effectuées par la mémoire stable ne repose pratiquement plus sur le processeur utilisateur, et ce en particulier pour les mécanismes d'exclusions mutuelles, de recopie, et de création de zones de mémoire, telles qu'on les verra plus loin en détail.

Surtout, il y a lieu d'éviter que deux zones de mémoire protégées ne se recouvrent, ce qui peut arriver lorsqu'on laisse au processeur utilisateur la charge de définir les zones de mémoire dont il se sert à partir des mots de mémoire qui sont eux-mêmes protégés intrinsèquement par la mémoire stable.

Un autre but de l'invention est que la taille des zones de mémoire protégées ne soit plus liée à la structure matérielle de la mémoire; on définira ainsi un objet, qui est un sous-ensemble de mots-mémoire, contigus ou non. A son tour, un objet peut être décomposé en sous-objets, qui sont des groupes de zones de mémoire, contigus ou non, mais nécessairement compris dans la partie de mémoire intéressant l'objet auquel ils se rattachent.

Un autre but encore de la présente invention est de fournir une mémoire stable dont la rapidité soit plus grande qu'antérieurement.

A cet effet, l'invention part d'une mémoire stable rapide, comprenant des interfaces d'adresse, d'entrée/sortie de données et d'instructions d'écriture et lecture, susceptibles d'être directement connectées à un processeur extérieur, un premier et un second ensembles indépendants de mémoire vive non volatile, possédant des entrées d'adresse, des entrées de commande d'écriture/lecture, et des entrées/sorties de données, et des moyens de contrôle d'accès reliés d'une part aux interfaces d'adresse ainsi que de commande d'écriture/lecture, d'autre part aux entrées d'adresse et de commande d'écriture/lecture des deux ensembles de mémoire, afin de n'autoriser l'accès qu'à une partie désignée des deux ensembles de mémoire, à chaque fois pour une opération désignée de lecture ou d'écriture, l'autorisation étant détruite après l'adressage de cette partie de mémoire.

Selon l'invention, les moyens de contrôle d'accès comprennent un contrôleur logique, associé à une première mémoire auxiliaire non volatile, destinée à contenir des informations de partition propres à décomposer identiquement chacun des ensembles de mémoire selon au moins un niveau de sous-ensembles disjoints, dits objets; et le contrôleur logique décompose chaque demande d'accès à la mémoire par le processeur extérieur en un ou plusieurs états actifs d'accès, dans chacun desquels il vérifie que la suite des adresses appliquées aux ensembles de mémoire couvre un sous-ensemble (ou objet) complet, tel que défini par les informations de partition, toute anomalie se traduisant par le passage du contrôleur logique en état d'erreur.

Très avantageusement, la mémoire comporte un organe commutateur possédant au moins un état de transfert où il interconnecte les entrées/sorties du premier ensemble de mémoire avec l'interface d'entrée/sortie de données, et un état d'échange où il interconnecte les entrées/sorties de donnés des deux ensembles de mémoire; de son côté, le contrôleur logique possède un état libre, où il peut recevoir une commande d'écriture ou de lecture du processeur extérieur, un état actif de lecture, accessible directement de l'état libre en réponse à une commande de lecture, un état actif d'écriture dans l'un des ensembles de mémoire où il place l'organe commutateur dans son état de transfert, un état actif de recopie de l'un dans l'autre des ensembles de mémoire, où il place l'organe commutateur dans son état d'échange, ainsi qu'au moins un état d'erreur, l'exécution d'une commande d'écriture en provenance du processeur extérieur impliquant le passage par l'état d'écriture, puis par l'état de recopie, avant tout retour à l'état libre.

Selon un autre aspect de l'invention, il est associé au contrôleur logique une seconde mémoire auxiliaire, vive et non volatile, formant un vecteur de marquage, de même taille que les ensembles de mémoire, adressé comme eux, et dont chaque composante, en son état normal, interdit l'accès pour altération aux mots possédant l'adresse associée à cette composante, dans l'un et l'autre de ces deux ensembles de mémoire; en réponse à une commande d'écriture du processeur extérieur, le contrôleur logique active le vecteur de marquage avant l'écriture dans le premier ensemble de mémoire, sélectivement pour la suite des adresses demandées, qu'il vérifie selon lesdites informations de partition, puis ramène le vecteur de marquage dans son état normal après la recopie du premier ensemble de mémoire dans le second, toute anomalie se traduisant par le passage du contrôleur logique en état d'erreur.

De préférence, l'organe commutateur possède aussi un état de comparaison des sorties de données respectives des deux ensembles de mémoire, pour indiquer leur concordance au contrôleur logique. En outre, en son état de comparaison, l'organe commutateur peut effectuer un contrôle préalable des sorties respectives des deux ensembles de mémoire, pour y déterminer d'éventuels bits altérés.

En variante, l'exécution d'une instruction d'écriture comprend le passage par un état actif d'ouverture ("mise à jour lecture") durant lequel sont explorés tous les mots constitutifs du sous-ensemble à écrire, et durant lequel s'effectue, pour chacun de ces mots, le changement d'état du vecteur de marquage, et l'état de comparaison est mis en oeuvre par le contrôleur logique pendant cet état actif d'ouverture, ce qui permet un contrôle du contenu, en particulier de cohérence, de l'objet par le processeur, avant l'écriture proprement dite.

Par ailleurs, dans l'état de lecture, le contrôleur logique autorise la lecture simultanée des deux ensembles de mémoire, la valeur lue n'étant validée que s'il y a concordance entre les sorties de données des deux ensembles de mémoire.

Selon un autre aspect de l'invention, le contrôleur logique possède un autre état, dit création d'objet, permettant au processeur de définir lesdites informations de partition, avec le contrôleur logique, et encore un autre état, dit destruction d'objet, permettant de modifier les partitions existant dans la mémoire, en particulier de supprimer les emplacements d'objets devenus inutiles.

Avantageusement, les informations de partition comprennent des informations de chaînage entre les adresses des mots des ensembles de mémoire, et au moins un jeu d'informations de pointage sur les adresses du premier et du dernier mot de chaque sous-ensemble (objet), ou mieux, les informations de partition comprennent au moins un autre jeu d'informations de pointage permettant de définir dans chaque sous-ensemble (objet) au moins un autre niveau de sous-ensembles (sous-objets).

Selon un autre aspect de l'invention, la mémoire comporte un registre de commande, en mémoire vive et non volatile, recevant seul à la fois les adresses et les données du processeur extérieur, par lequel il est directement adressable, et propre à contenir une commande en cours, ainsi qu'un niveau d'accès dans la partition.

D'autres caractéristiques et avantages de l'invention apparaîtront à l'examen de la description détaillée ci-après et des dessins annexés, sur lesquels :

- la figure 1 est un schéma général d'un dispositif selon l'invention;
- les figures 2 et 2A sont respectivement un tableau permettant de mieux comprendre l'interaction du vecteur de chaînage avec les bancs de mémoire selon l'invention et l'organigramme d'un mécanisme utilisant ce vecteur de chaînage;
- la figure 3 est un schéma plus détaillé d'un mode de réalisation du dispositif selon l'invention tandis que la figure 3A est un schéma partiel correspondant à la figure 3, modifié en sa présentation pour mieux faire apparaître certains aspects de l'invention;
- la figure 4 est un diagramme d'états relatif à la lecture selon l'invention alors que la figure 4A est un schéma algorithmique du déroulement d'une opération de lecture, et que les figures 4B à 4E sont des schémas faisant apparaître certaines sous-fonctions répétitives, en référence à la figure 4A;
- la figure 5 est un diagramme d'états relatif aux opérations d'écriture selon l'invention alors que les figures 5A et 5B sont des schémas algorithmiques relatifs à une opération d'écriture selon l'invention;
- la figure 6 est un diagramme d'états relatif à une opération de création d'objets selon l'invention, alors que les figures 6A à 6D sont un schéma algorithmique d'une phase de création d'objet selon l'invention; et
- la figure 7 est un diagramme d'états relatif à une opération de destruction d'objet selon l'invention.

Les dessins annexés, de même que les annexes à la description, comportent de nombreuses informations de caractère certain. A ce titre, ils sont tous à considérer comme faisant partie de la description, non seulement pour mieux faire comprendre l'invention à l'homme de l'art, mais aussi pour contribuer à la définition de celle-ci, le cas échéant.

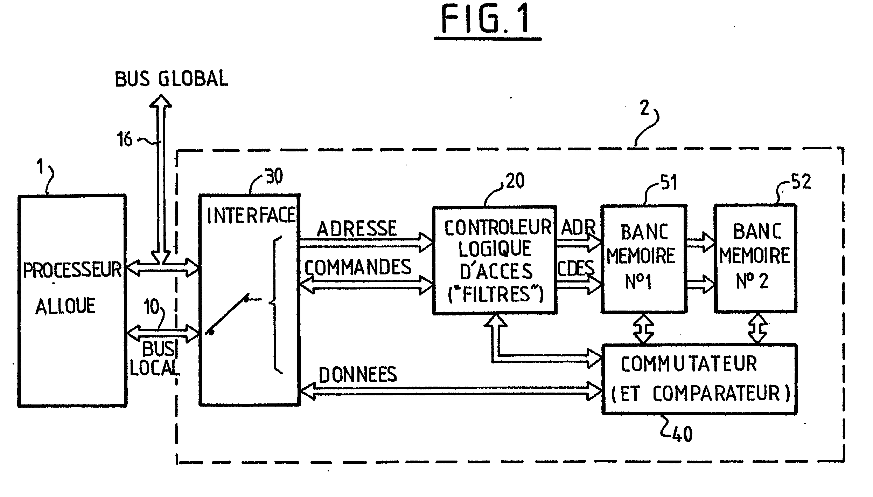

Sur la figure 1, un processeur, ou une carte d'unité de traitement comportant un processeur, noté 1, est relié d'une part à un bus local 10, d'autre part à un bus global 16, qu'il peut partager avec d'autres processeurs analogues.

Ces deux bus 10 et 16 relient le processeur 1 à une carte de mémoire stable rapide 2, ou plus exactement à l'interface 30 de celle-ci. L'interface 30 est muni d'une commutation dont l'état normal fait que le processeur 1 communique par le bus local 10 avec la mémoire 2. Cependant, lorsque le processeur 1 est inactif ou indisponible, l'autre état permet la connexion de la mémoire 2 par l'interface 30 sur le bus global 16, d'où la possibilité de partager la mémoire stable rapide entre plusieurs processeurs.

Mais la situation normale consiste en une allocation de la mémoire 2 au processeur 1, qui est donc dénommé processeur alloué. On considérera maintenant qu'il en est ainsi.

La mémoire stable 2 comporte, outre l'interface 30 déjà mentionné, un contrôleur logique d'accès ou filtre 20, deux ensembles de mémoire 51 et 52, que l'on appellera plus brièvement bancs de mémoire (remarque étant faite que le mot "banc" n'a pas ici la même définition que dans la Demande de brevet antérieure), et un organe distributeur 40. Ce dernier est avantageusement aussi muni d'un comparateur.

Les adresses et les commandes tirées par l'interface 30 du bus local 10 sont transmises au contrôleur logique d'accès 20, qui, sous condition, les transmet aux bancs de mémoire 51 et 52, tout en commandant simultanément l'état du distributeur 40.

Les données tirées par l'interface 30 du bus local 10 sont envoyées directement au distributeur 40, qui peut effectuer différents branchements de ces données aux bancs de mémoire 51 et 52.

Selon l'invention, le contrôleur logique d'accès ou filtre 20 est associé à une mémoire auxiliaire, vive et non volatile, destinée à contenir des informations définissant une partition identique de deux ensembles de mémoire selon au moins un niveau de sous-ensembles disjoints, que l'on appellera maintenant objets.

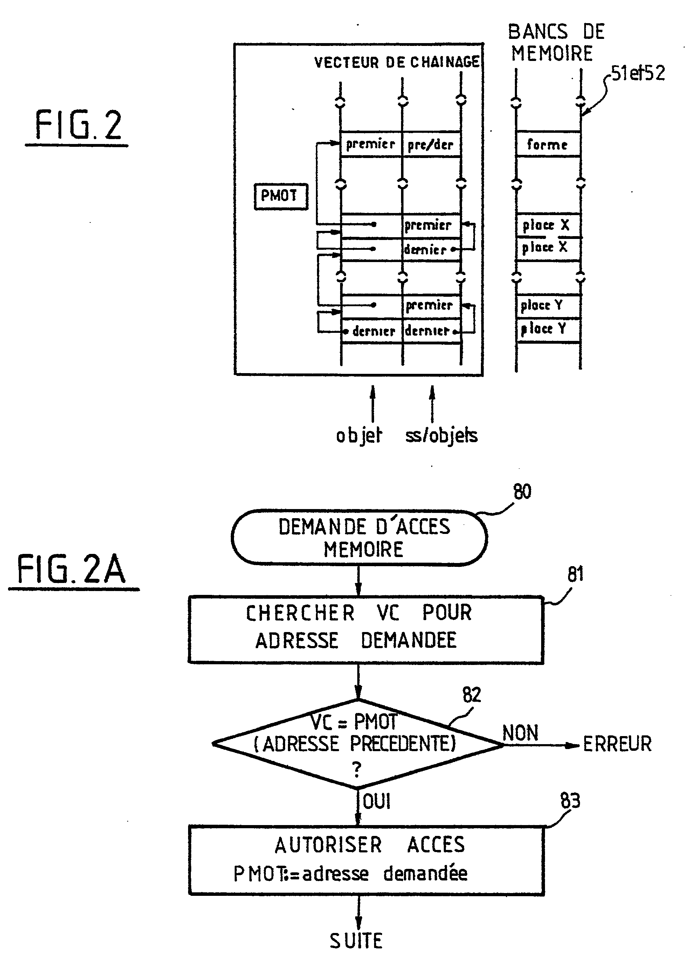

La figure 2 le montre, en faisant apparaître :
- un objet, défini par l'adresse de son premier mot ("premier"), une référence de chaque autre mot mémoire que comprend l'objet au mot précédent ("PMOT"), et enfin l'indication "dernier" sur le dernier mot que comprend cet objet;
- des sous-objets dudit objet, que l'on peut définir en se contentant de marquer le premier, et le dernier mot mémoire de chaque sous-objet.

Ces informations peuvent être enregistrées sous la forme d'une mémoire-vecteur, de même taille que les deux bancs de mémoire 51 et 52.

Ainsi se trouve défini un vecteur de chaînage VC, dont on décrira maintenant le rôle général en référence à la figure 2A.

A chaque demande d'accès mémoire (80) pour laquelle le processeur extérieur présente l'adresse demandée, une fonction 81 examine le contenu du vecteur de chaînage VC à cette adresse. L'adresse du mot mémoire précédemment demandé a été stockée dans le registre PMOT. La fonction 82 détermine si le contenu de VC est bien le même que PMOT, avant d'autoriser l'accès mémoire (83), et de mettre la nouvelle adresse dans PMOT. Ce processus se répète, jusqu'à parcourir tout l'objet.

Une exception intervient pour le premier mot demandé. On vérifie simplement qu'il est le premier mot de l'objet. Son adresse est alors prise en compte dans PMOT.

De plus, avant de passer à un autre objet (ou une autre opération sur le même objet), on vérifie que le dernier mot (la borne de fin) a été accédé.

On donnera plus loin des exemples d'opérations, notamment d'écriture et de lecture, qui font application de ce qui précède.

Dès maintenant, on observe que : à chaque fois que l'on veut créer un nouvel objet en mémoire, il faut préalablement initialiser le contrôleur logique d'accès ou filtre 20 selon la topologie de cet objet.

Cela consiste à écrire dans le vecteur de chaînage les pointeurs correspondants (niveau objet seulement) et les bornes (premier et dernier mot), ce qui intéresse à la fois le niveau objet et tous les niveaux de sous-objets.

De préférence, on interdit l'accès à la mémoire, pour les mots n'appartenant à aucun objet. Le vecteur de chaînage est alors initialisé avec une valeur ne pouvant être interprétée comme un pointeur, ce qui provoque une erreur lors de l'accès.

Ces initialisations ne sont possibles que dans un état spécifique du contrôleur logique ou filtre 20, comme on le verra plus loin. Ainsi, le vecteur de chaînage VC n'est par modifiable directement par le processeur extérieur, et garde sa propriété de protection.

Le vecteur de chaînage permet d'assurer l'atomicité d'une opération sur un objet, et d'éviter tout recouvrement entre deux zones mémoire appartenant à deux objets différents.

L'exclusion mutuelle, et la possibilité de recouvrer l'information dans la plupart des cas d'erreur, sont assurées par le fait que l'écriture est décomposée en une suite ordonnée (et nécessaire) d'opérations atomiques, telles que définies ci-dessus, comme on le verra plus loin.

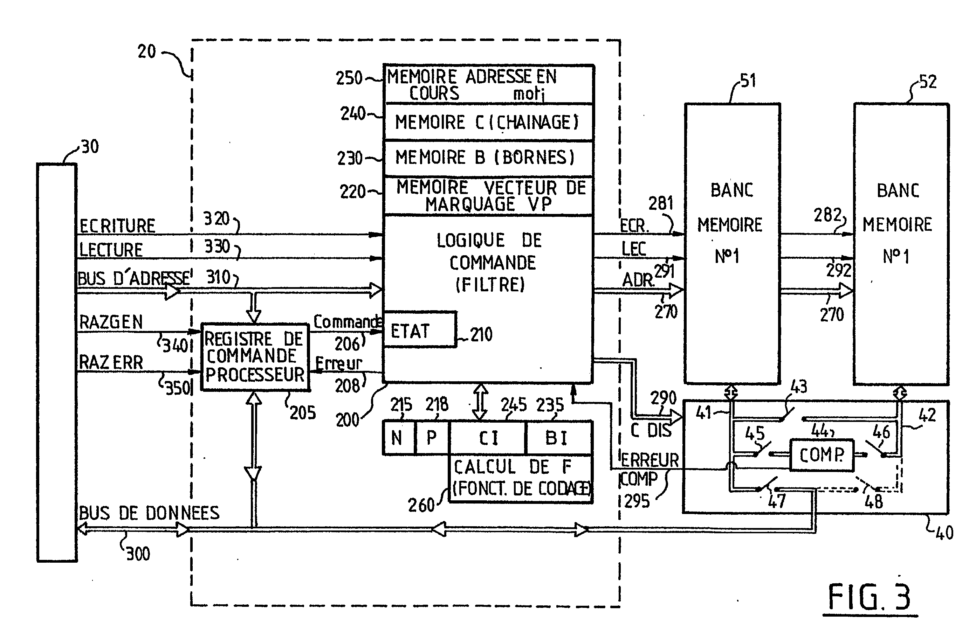

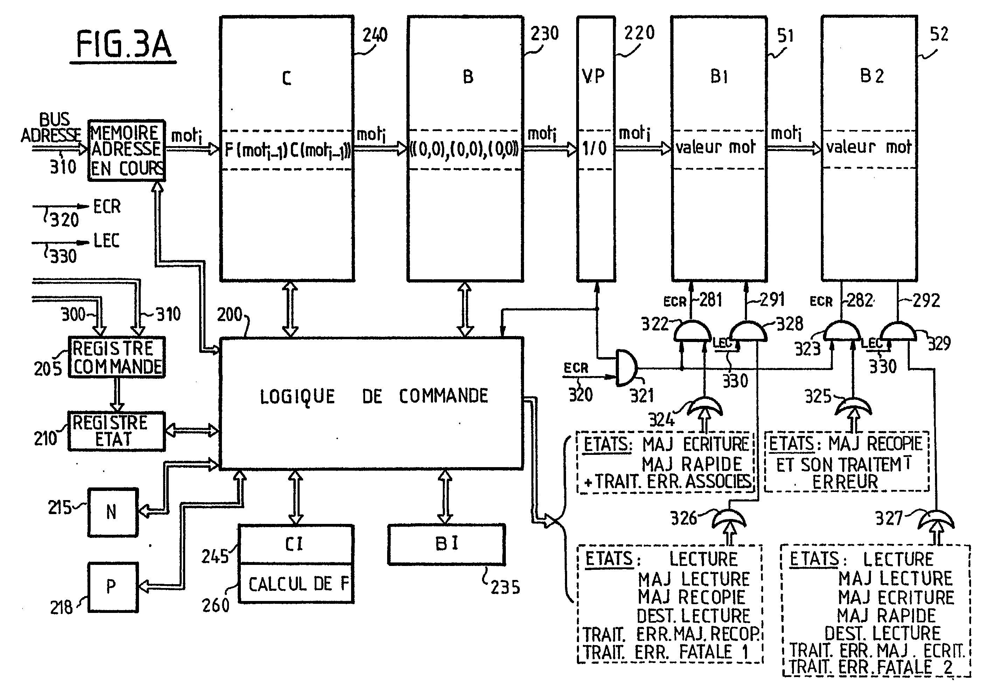

Au préalable, il convient de décrire les fonctions du commutateur 40 (fig.1), fonctions qui sont détaillées sur la figure 3.

Ce commutateur possède :

- un état de transfert, où il interconnecte les entrées/sorties du banc de mémoire 51 avec le bus de données 300;
- un état d'échange où il interconnecte les entrées/sorties de données des deux bancs 51 et 52.

De préférence, il possède aussi :
- un état de comparaison des sorties de données respectives des deux bancs 51,52; et
- le cas écheant, un second état de transfert, où ce sont les entrées-sorties du second banc de mémoire 52 qui sont connectées à l'interface 30 d'entrée-sortie de données par le bus de données 300.

Pour sa part, le contrôleur logique 20 possède :
- un état libre, où il peut recevoir une instruction d'écriture ou de lecture du processeur extérieur,
- un état actif de lecture, accessible directement de l'état libre en réponse à une instruction de lecture (le commutateur 40 peut alors être placé soit dans l'un et/ou l'autre de ses états de transfert, soit, de préférence, dans son état de comparaison, puis dans l'un des états de transfert);
- un état actif d'écriture dans le premier banc de mémoire 51, où il place le commutateur 40 dans son état de transfert correspondant,
- un état actif de recopie du premier banc de mémoire dans le second, où il place le commutateur 40 dans son état d'échange, et
- au moins un état d'erreur, comme on le verra plus loin.

L'exécution d'une instruction d'écriture implique le passage par l'état d'écriture, puis par l'état de recopie, avant tout retour à l'état libre.

Dans chaque état actif comportant accès à la mémoire (lecture, écriture ou recopie), le contrôleur logique vérifie que la suite des adresses demandées par le processeur extérieur couvre un sous-ensemble ou objet complet, tel que défini par les informations de partitions correspondantes du vecteur de chaînage. Lorsqu'il s'agit d'une instruction d'écriture, le contrôleur logique 20 se sert en outre d'un vecteur de marquage, qui possède lui aussi la même taille que chacun des bancs de mémoire 51 et 52. Ce vecteur de marquage peut, en chaque position, comprendre un seul bit. La valeur normale, zéro par exemple, interdit l'accès pour altération au mot qui possède l'adresse associée à ce bit (qui est une composante du vecteur de marquage) dans l'un et l'autre des deux bancs de mémoire 51 et 52. Au contraire, la valeur active 1 autorise un tel accès.

En réponse à une instruction d'écriture, le contrôleur logique 20 active le vecteur de marquage avant l'écriture dans le premier banc de mémoire 51. Cette activation intéresse sélectivement les seules composantes du vecteur de marquage qui correspondent à la suite des adresses demandées par le processeur extérieur. En même temps, est effectuée la vérification de ce que la suite des adresses demandées par le processeur extérieur couvre bien un objet ou sous-objet complet, tel que défini par le ou les vecteurs de chaînage.

Le vecteur de marquage n'est ramené en son état normal (pour les composantes intéressées) qu'après la recopie du premier banc de mémoire 51 dans le second 52. Toute anomalie se traduit par le passage du contrôleur logique 20 en état d'erreur.

L'activation du vecteur de marquage peut s'effectuer pendant l'état actif d'écriture lui-même, mais bien entendu avant l'action d'écriture proprement dite. On dispose en effet d'une sécurité, du fait que le contenu précédent de l'objet demeure intégralement contenu dans le second banc de mémoire 52, tant que l'écriture dans le premier banc 51 n'est pas terminée.

Toutefois, on préfère actuellement (Annexe A1) que l'exécution d'une instruction d'écriture comprenne tout d'abord le passage du contrôleur logique 20 par un état actif d'ouverture (également dénommé "mise à jour lecture") durant lequel sont explorés tous les mots constitutifs de l'objet ou sous-objet à écrire, et durant lequel on effectue pour chacun de ces mots le changement d'état du vecteur de marquage, de préférence après avoir vérifié par lecture conjointe des deux bancs de mémoire que leurs contenus (relatifs à la version précédente de l'objet) coïncident.

L'exécution de l'instruction d'écriture se poursuit alors par le passage dans l'état actif d'écriture (sans toucher au vecteur de marquage) puis dans l'état actif de recopie, lors duquel chaque opération de recopie est suivie d'un retour du vecteur de marquage dans son état normal, pour chacun des mots mémoire concernés.

L'exécution d'une instruction de lecture peut se faire de la même manière que l'état actif d'ouverture ou de mise à jour lecture déjà mentionné, sauf le fait très important que l'on omet de modifier le vecteur de marquage, qui reste ainsi en son état normal interdisant toute modification des bancs de mémoire 51 et 52.

La lecture s'accompagne d'une comparaison des contenus des deux bancs de mémoire, avant que les informations lues ne soient délivrées au processeur extérieur à travers l'interface 30.

Avantageusement, en son état de comparaison, l'organe distributeur (ou commutateur) est aussi agencé pour effectuer un contrôle préalable des sorties respectives des deux bancs de mémoire, afin d'y déterminer d'éventuels bits altérés ("decay" de la mémoire), par tout code à détection d'erreur connu, notamment contrôle de parité. Il est alors possible de mettre à jour l'un des bancs de mémoire (celui dont les bits sont altérés) par rapport à l'autre.

Il faut par ailleurs créer les structures d'objet et de sous-objets dans la mémoire.

Cela pourrait être fait une fois pour toutes, par construction, au prix d'un manque total de souplesse, peu compatible avec la plupart des applications.

5

Il est donc préférable que le contrôleur logique possède un autre état, dit "création d'objets", permettant au processeur extérieur de définir à l'avance les informations de partition, c'est-à-dire les vecteurs de chaînage, sous le contrôle du contrôleur logique.

Il est avantageux de prévoir encore un autre état, dit "destruction d'objet", permettant de libérer la mémoire d'emplacements d'objets devenus inutiles.

Mais, plus généralement, on peut envisager que cet autre état permette au processeur extérieur de modifier dynamiquement les partitions existant dans la mémoire.

Ainsi, l'invention permet au contrôleur logique de définir un nouvel objet à partir d'objets existants (qui deviennent des sous-objets) ou inversement de définir de nouveaux sous-objets d'un objet existant; dans les deux cas, le contenu des objets peut être conservé.

Les fonctions qui viennent d'être décrites peuvent être réalisées de différentes manières. On va maintenant en donner un exemple particulier de réalisation.

La figure 3 illustre de manière plus détaillée la carte mémoire stable, dans cet exemple particulier.

L'interface 30 décompose le bus local (ou le bus global) en un bus de données 300, en un bus d'adresses 310, le cas échéant en une ligne d'écriture 320 et une ligne de lecture 330 (signaux directement interprétables par les bancs de mémoire 51 et 52), et aussi en des lignes 340 et 350 qui peuvent véhiculer respectivement un signal de remise à zéro général noté RAZGEN (ou "reset"), et un signal de remise à zéro après erreur noté RAZERR.

Le contrôleur logique 20 comprend une logique de commande (le "filtre" proprement dit), notée 200, à laquelle sont associés :
- un registre d'ETAT 210,
- une mémoire 220 pour le vecteur de marquage VP,
- une mémoire 230 pour les bornes B du chaînage,
- une mémoire 240 pour le chaînage C proprement dit,
- une mémoire 250 pour l'adresse en cours demandée par le processeur extérieur.

La logique de commande 200 est en pratique réalisée sous forme câblée, par exemple à l'aide de réseaux logiques programmables (programmable logic arrays), plutôt que par microprocesseurs.

Un registre 205 reçoit le bus d'adresse 310 et le bus de données 300, pour pouvoir stocker les commandes venant du processeur extérieur. Ces commandes lui sont fournies directement, du fait que ce registre possède une adresse particulière, vu du processeur extérieur.

Il reçoit aussi les signaux 340 et 350 déjà cités. Le dialogue de ce registre 205 avec la logique de commande 200 consiste essentiellement au transfert de la commande dans le registre d'ETAT 210, lorsque la logique 200 l'autorise, par une ligne 206. Inversement, une ligne 208 permet à la logique de commande 200 d'adresser un signal d'erreur au registre de commande processeur 205. Ce signal d'erreur peut alors être lu par le processeur extérieur.

Le contrôleur logique d'accès 20 comprend encore :
- une mémoire 215 pour le niveau N, qui prend la valeur 1 pour un objet, la valeur 2 pour un sous-objet, et la valeur 3 pour un sous-objet de sous-objet (et ainsi de suite le cas échéant),
- une mémoire 218 pour un invariant P, indiquant que l'on est sur le premier mot d'un objet, ou sous-objet, ou sous-objet de sous-objet (et ainsi de suite le cas échéant),
- une mémoire 245 pour une quantité CI qui est un indicateur de chaînage courant, dans lequel on va stocker la valeur de C pour le mot en cours d'adressage. Cette mémoire CI joue le rôle du registre PMOT rencontré à propos des figures 1, 2 et 2A,
- une mémoire 235 dans laquelle on stocke un couple d'informations définissant les bornes en vigueur pour le mot en cours d'adressage, compte tenu bien sûr du niveau N où l'on se trouve.

Enfin, un organe 260 permet le calcul d'une fonction de codage que l'on définira plus loin, à l'aide des mémoires 235 et 245.

Les liaisons du contrôleur logique d'accès 20 aux bancs de mémoire 51 et 52 se limitent au transfert de la même information d'adresse à ceux-ci, ainsi qu'au transfert (cette fois sélectif) des signaux de commande d'écriture et de lecture qui sont appropriés à ces bancs de mémoire 51 et 52. Le bus d'adresse est noté 270. Les commandes d'écriture sont notées 281 et 282 respectivement pour les bancs 51 et 52. Les commandes de lecture sont notées 291 et 292, respectivement pour les bancs 51 et 52.

Les entrées-sorties de données du banc 51 se font sur un bus 41. Celles du banc 52 se font sur un bus 42. Les deux bus peuvent être interconnectés par un interrupteur 43 du commutateur 40 (l'interrupteur 43 est fermé dans l'état d'échange du commutateur).

Les bus 41 et 42 peuvent être appliqués de part et d'autre d'un comparateur 44 par des interrupteurs 45 et 46, tous deux fermés dans l'état de comparaison du distributeur 40.

Un autre interrupteur 47 permet la connexion du bus 41 au bus de données 300. Il peut être utile de prévoir encore un interrupteur 48 pour relier les bus 42 et 300.

L'état des interrupteurs 43 à 47 (le cas échéant 48) est sous le contrôle des signaux de commande du commutateur notés CDIS, et provenant par des lignes 290 du contrôleur logique 20. En retour, le comparateur 44 peut indiquer une erreur de comparaison, par une ligne 295, au contrôleur logique d'accès 20.

Techniquement, la mémoire stable rapide de la figure 3 est mise en oeuvre par une carte de mémoire vive, secourue par batterie, et directement adressable par le processeur extérieur, à travers l'interface 30 qui se contente de réaliser des interconnexions et le cas échéant la commutation entre le bus local et le bus global, déjà décrite à propos de la figure 1.

Il est prévu d'y ajouter un chien de garde (souvent noté ci-après CDG en abrégé), qui va être armé par le passage du registre d'ETAT 210 de l'état libre vers un autre état. Le désarmement du chien de garde est provoqué par le retour du registre d'état à l'état libre. Ce chien de garde a pour fonction de permettre d'assurer que le processeur termine une phase d'accès en un temps donné, temps qui peut varier suivant la nature de la phase d'accès. Si le délai est écoulé, le chien de garde provoque une erreur.

Toute erreur, ainsi que le passage du registre d'ETAT 210 dans l'état libre, provoquent une interruption vers le processeur extérieur.

Le seul élément de la carte de mémoire stable qui soit adressable directement pour le processeur extérieur est le registre de commande 205. Le processeur va donc pouvoir y mettre des COMMANDES, dont la liste (pour cet exemple particulier) est donnée en annexe A2, et le niveau N concerné.

Lorsqu'elle atteint le registre d'ETAT 210, la COMMANDE détermine les possibilités d'accès aux bancs de mémoire 51 et 52 (B1 et B2 dans l'Annexe A2).

A chaque COMMANDE sera associée une FONCTION (qui porte en principe le même nom). La FONCTION s'exécute chaque fois que le processeur extérieur présente une nouvelle adresse sur le bus d'adresses 310. Cette adresse est soit accompagnée d'un mot en attente (s'il s'agit d'une lecture), soit accompagnée d'un vrai mot (s'il s'agit d'une écriture), soit accompagnée d'un mot vide (notamment lorsque la mémoire va recopier le premier banc dans le second).

Les mémoires vecteurs B et C (notées 230 et 240) ne sont pas adressables par le processeur extérieur.

Chaque case ou composante du vecteur que constitue la mémoire B est constituée d'un couple de deux bits. Le premier bit est à 1 si l'adresse du couple dans la mémoire B correspond à l'adresse du premier mot d'un objet (ou sous-objet, etc.) dans les bancs de mémore 51 et 52. Le second bit est à 1 s'il s'agit du dernier mot d'un objet (sous-objet, etc.). Les deux bits sont à 0 dans les autres cas.

Cela s'entend pour un niveau d'objet dans la mémoire. Bien entendu, chaque case ou adresse de la mémoire vecteur B contient autant de couples de bits qu'il y a de niveaux d'objets et sous-objets possibles.

La mémoire vecteur C pourrait être réalisée sous la forme d'un tableau de pointeurs qui relie tous les mots constituant individuellement un objet (et par conséquent ses sous-objets, etc.). Mais, ces mémoires vecteurs ont nécessairement la même taille d'adresse (c'est-à-dire le même nombre de cases) que les bancs 51 et 52. Si les bancs 51 et 52 possèdent un mégamot ou un mégamultiplet (par exemple un mégaoctet), une adresse contient 20 bits.

Puisque la mémoire C doit réaliser un chaînage, les pointeurs de chaînages, exprimés en clair, contiendraient donc eux aussi 20 bits. Cela leur donne une taille considérable, qui peut être simplifiée selon l'invention par un codage.

Ce codage consiste à stocker dans le vecteur de chaînage C (mémoire 240) la somme du nombre de bits à 1 du pointeur et du nombre de bits à 1 du contenu de la mémoire vecteur C pour le mot précédent, c'est-à-dire celui désigné par ce pointeur.

On note $mot_i$ l'adresse du mot courant de l'objet, et $mot_{i-1}$ l'adresse du mot précédent.

La fonction F de codage du chaînage est alors :

$C(mot_i) = F(mot_{i-1}, C(mot_{i-1}))$ = nombre de bits à 1 dans l'information d'adresse $mot_{i-1}$ + nombre de bits à 1 dans $C(mot_{i-1})$.

Cette définition étant récursive, la mémoire 245 va simplement servir à stocker la valeur du chaînage pour le mot en cours d'adressage. La mise à jour ou incrémentation du chaînage s'écrit alors :

$CI := F(mot_i, CI)$.

Il reste à déterminer ce qu'on va faire au premier mot d'un chaînage, et a fortiori à la création de l'objet.

A la création de l'objet, il faut calculer $C(mot_i)$ pour chaque mot de la mémoire vecteur C. On initialise CI à zéro. Les mots sont traités en séquence, et pour chacun, l'on effectue :

$C(mot_i) := CI$

$CI := F(mot_i, CI)$.

Le résultat est que tout second mot reçoit comme valeur C le nombre des bits à 1 de l'adresse du premier mot.

Ensuite, lors de tout accès à un premier mot, on se contente de comparer B (premier) à zéro, pour vérifier qu'il s'agit bien d'un premier mot, après quoi on fait :

$CI := F(mot_i, CI)$,

ce qui prépare CI pour le mot suivant.

Le registre P noté 218 aura permis d'indiquer s'il s'agit ou non du premier mot d'un objet (et d'un objet seulement, non d'un sous-objet).

Pour sa part, le registre BI a la même taille qu'une case de la mémoire vecteur B. Ce registre BI stocke donc, pour chaque niveau, un couple de bits indiquant si l'on est au premier mot d'un objet (ou sous-objet, etc.), en cours d'objet (ou sous-objet, etc.), ou au dernier mot d'un objet (ou sous-objet, etc.).

La partie de BI que l'on doit prendre en compte est définie par la valeur de N contenue dans le registre 215.

Le contenu du registre BI est remis à zéro au début de chaque phase d'un accès à la mémoire. Si pendant un accès, une borne est rencontrée, elle est inscrite dans BI.

Cette opération de mise à jour du registre BI à partir du contenu de la mémoire vecteur B a été appelée "OU ETENDU" et est notée v. On écrit donc :

BI : = BIvB(mot$_i$)

La table de vérité de cette fonction OU ETENDU, pour un niveau donné, apparaît en Annexe A3. Les états d'erreur seront pris en compte dans les traitements d'erreurs décrits plus loin.

A la fin d'une phase d'accès à un objet ou sous-objet, BI|N| doit être égal à (1,1).

La structure du vecteur de marquage VP contenue dans la mémoire 220 est plus simple, puisqu'il n'y a cette fois qu'un bit pour chaque adresse possible dans les bancs de mémoire 51 et 52. Ce bit est nomalement à zéro, pour interdire l'accès aux bancs de mémoire afin d'en modifier le contenu. Lorsqu'il est au contraire à 1, il est possible de modifier le contenu des bancs de mémoire, à l'adresse correspondante.

L'adresse en cours, notée mot$_i$, est contenue dans le registre 250.

Il convient maintenant de décrire les différentes fonctions que va effectuer la mémoire stable selon l'invention. Cela sera effectué en principe sur une double base :
- une figure formant automate ou tableau d'états, et
- une ou plusieurs figures donnant la séquence des opérations qu'effectue le contrôleur logique, en réponse aux interventions du processeur. Pour de telles figures, on a placé en partie droite les fonctions réalisées par la mémoire elle-même, et en partie gauche les interventions du processeur, qui peuvent être :
. une COMMANDE, associée le cas échéant à l'indication du niveau d'accès,
. une adresse, mot$_i$, accompagnée d'un mot en attente noté variable valeur ou, plus brièvement, VAR VALEUR, s'il s'agit d'une opération de lecture. Pour une opération d'écriture, le mot à écrire est indiqué par le processeur, ce que l'on a noté "valeur mot".

Par ailleurs, dans les figures comportant "tableau des états", les états principaux, en relation directe avec l'essence de l'invention, sont illustrés en trait fort. Les états auxiliaires comme les traitements d'erreurs, les initialisations générales, sont illustrés en trait plus fin.

Ces tableaux d'état sont importants, en ce qu'ils définissent les transitions permises entre les différents états.

La figure 3A reprend une partie des éléments de la figure 3, dans une illustration différente qui permet de mieux comprendre le lien étroit entre la structure matérielle de la mémoire stable, et les fonctions décrites ci-après. On remarque notamment le rôle des portes logiques 321 à 323 (portes ET) ainsi que 324 à 327 (portes OU) pour obtenir l'exclusion mutuelle des deux bancs en écriture. En pratique, on aura matériellement un rebouclage de la sortie de la porte 323 sur l'entrée de 322, et réciproquement. Les portes ET 328 et 329 permettent la lecture.

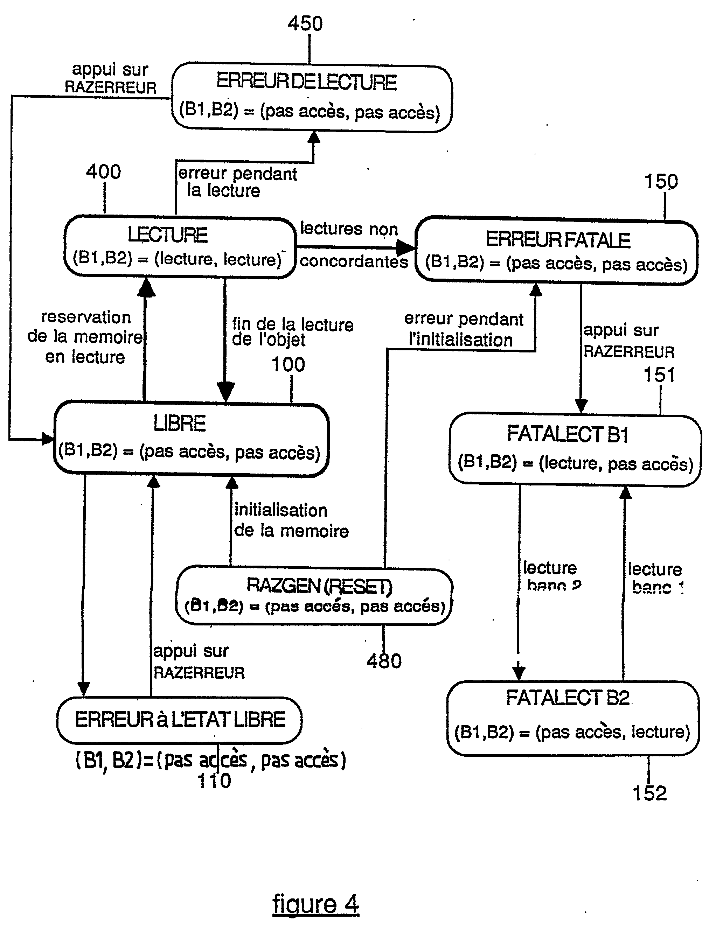

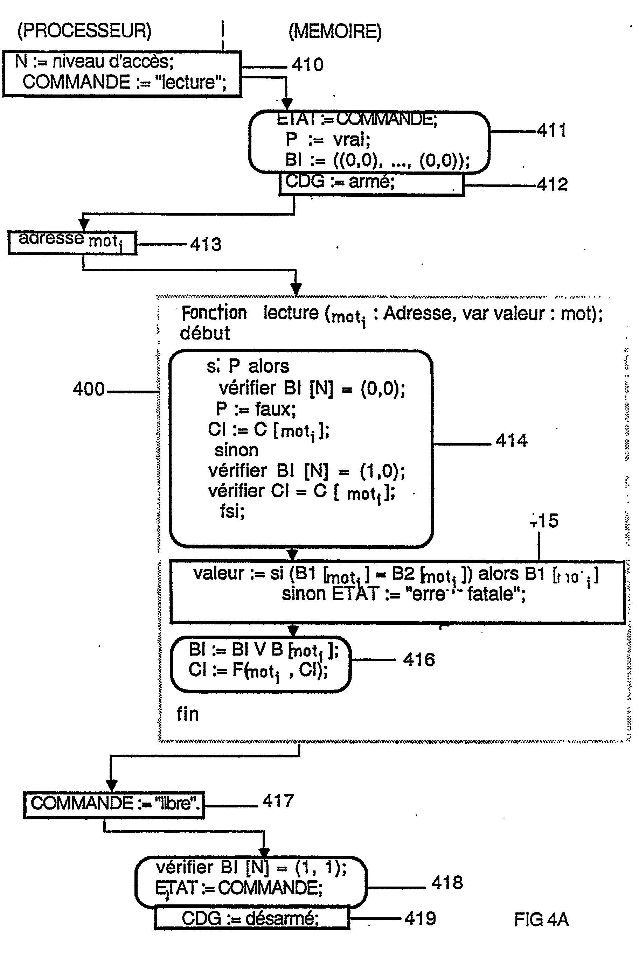

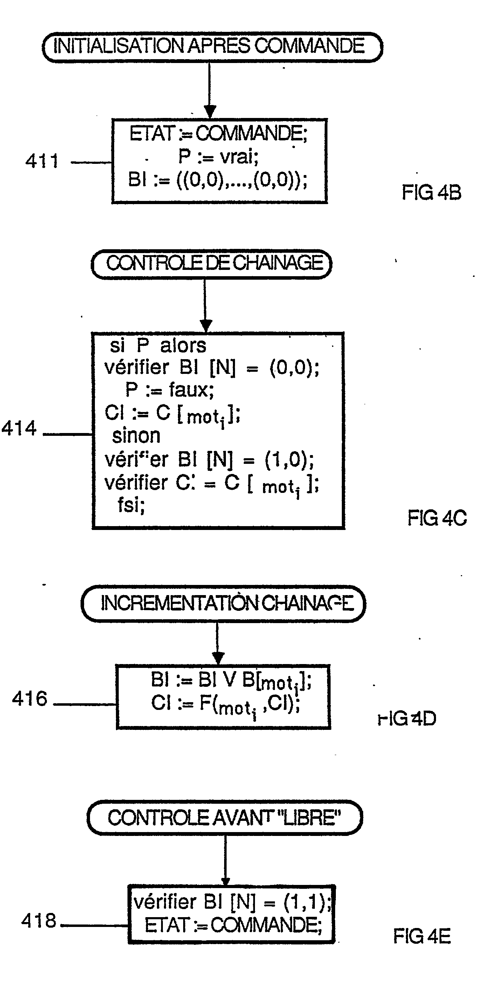

On décrira maintenant l'exécution d'une lecture d'un objet (ou sous-objet), en référence aux figures 4 et 4A.

Le point de départ est l'état libre 100.

En 410, le processeur délivre une COMMANDE de lecture, accompagnée du niveau d'accès N appropiré.

En 411, la mémoire effectue une étape d'initialisation après commande, consistant d'abord à écrire la commande dont il s'agit dans son registre d'état 210, ensuite à faire passer à VRAI le contenu P de son registre 218 de premier mot, enfin à remettre à zéro tous les niveaux du contenu BI de son registre de borne courante 235.

L'étape 412 consiste ensuite en l'armement du chien de garde pour la temporisation appropriée.

Après cela, le processeur émet en 413 l'adresse d'un mot qu'il veut lire. On aura compris que les adresses présentées doivent couvrir séquentiellement tous les mots constitutifs de l'objet considéré.

Démarre alors dans la mémoire une FONCTION de lecture 400, répétée pour chaque adresse présentée en 413.

Avant la lecture proprement dite, des étapes 414 permettent le contrôle du chaînage, cette expression incluant maintenant aussi le contrôle des bornes.

Si P est VRAI, on est au premier mot, et le contenu BI du registre 235 a déjà subi l'opération de OU ETENDU pour le niveau N concerné, ce que l'on vérifie.

P est alors mis à FAUX, et la valeur initiale de l'indicateur de chaînage CI est calculée, de la manière précédemment décrite.

Si l'on n'était pas au premier mot, on vérifie que la première borne de l'objet a bien été rencontrée, et l'on vérifie le chaînage.

Le fait que toutes ces vérifications soient positives signifie que, pour le moment, les informations de partition contenues dans le contrôleur logique sont respectées par les demandes d'adresse émanant du processeur utilisateur.

On peut alors procéder à l'étape 415, qui consiste à vérifier que les deux mots contenus dans les bancs B1 et B2 à l'adresse mot$_i$ sont égaux, auquel cas on prend l'un d'entre eux, par exemple B1(mot$_i$).

Dans le cas contraire, il s'agit d'une erreur fatale et l'on passe à l'état 150 de la figure 4.

Ensuite intervient une étape 416 qui consiste à incrémenter le chaînage, tout d'abord en faisant l'opération de OU ETENDU sur BI, puis en déterminant la nouvelle valeur de l'indicateur de chaînage CI.

Lorsque cela est terminé pour toutes les adresses mot$_i$ présentées par le processeur en 413, ce dernier propose la commande libre en 417.

A l'étape 418, la mémoire vérifie d'abord que la dernière borne a bien été atteinte pour BI(N). Elle accepte alors de passer à l'état libre, puis désarme son chien de garde en 419.

Un certain nombre des étapes qui viennent d'être décrites reviendront souvent.

C'est le cas pour l'étape 411, illustrée isolément sur la figure 4B avec sa désignation "initialisation après commande".

C'est aussi le cas pour l'étape 414, illustrée de même sur la figure 4C avec sa désignation "contrôle de chaînage".

C'est encore le cas pour l'étape 416, illustrée sur la figure 4D avec sa désignation "incrémentation chaînage".

C'est enfin le cas pour l'étape 418, illustrée sur la figure 4E avec sa désignation "contrôle avant "libre"".

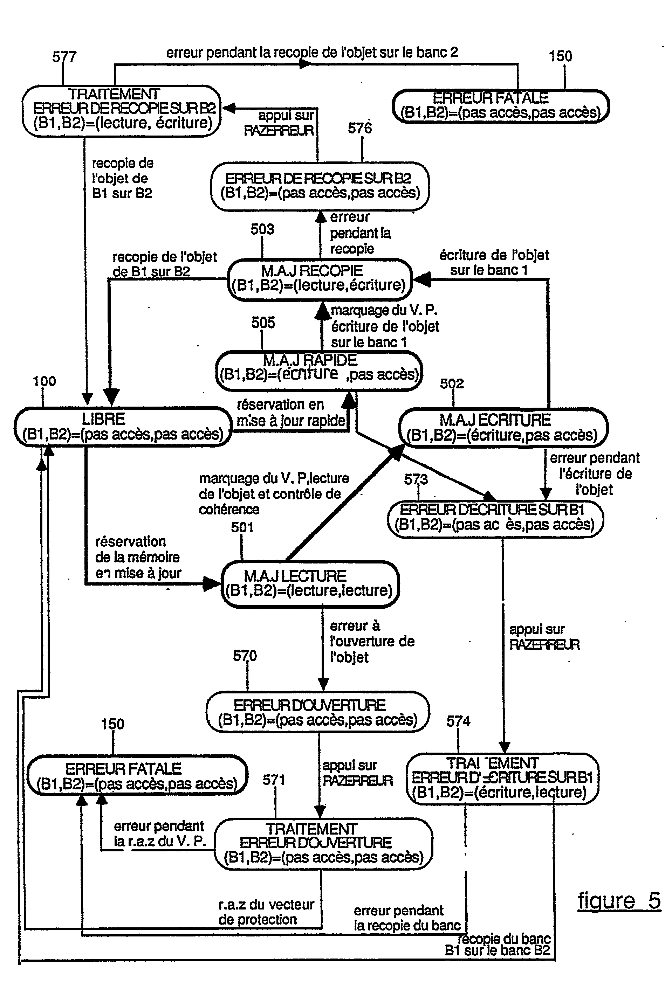

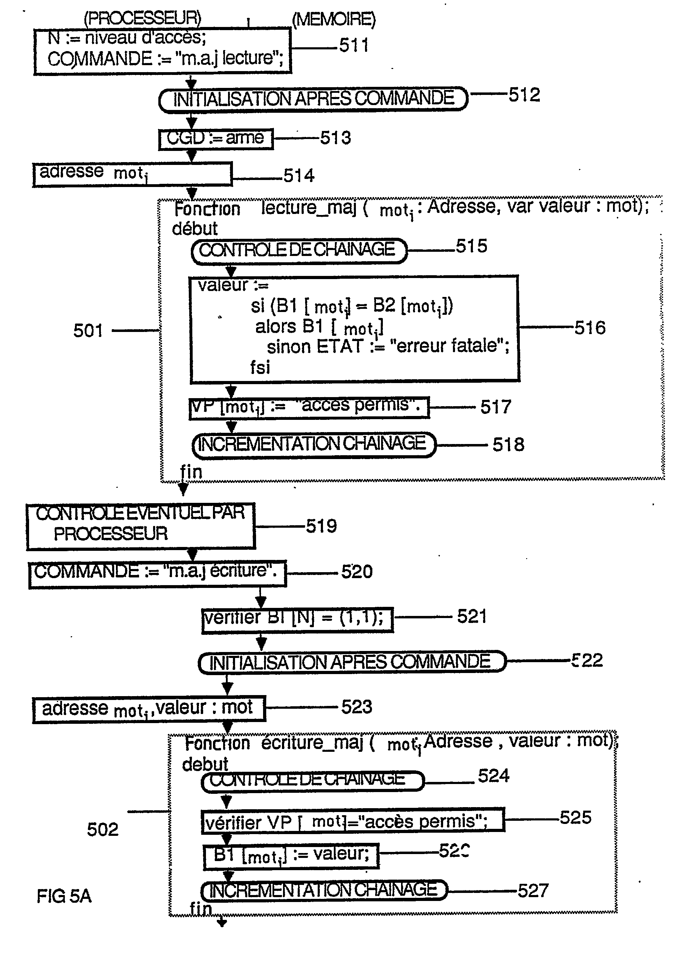

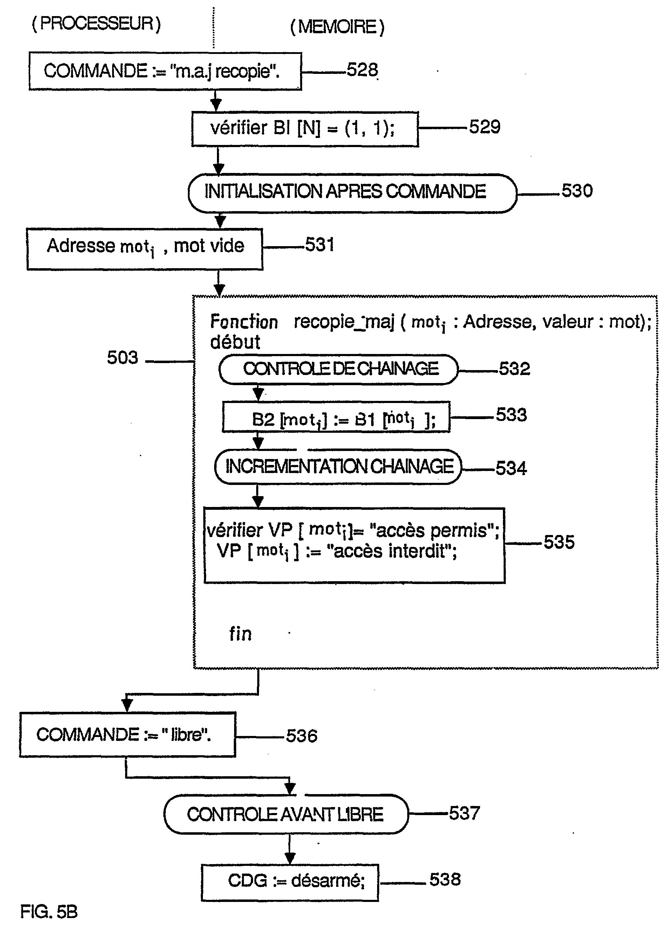

Il est maintenant fait référence aux figures 5, 5A et 5B, pour la description de l'écriture, qui est certainement un aspect des plus importants de l'invention.

Il a été prévu deux modes d'écriture. On décrira tout d'abord le plus complet.

En 511, le processeur délivre une COMMANDE de mise à jour-lecture, ainsi que le niveau d'accès N. La mémoire répond en 512 par l'initialisation après commande (figure 4B), puis arme le chien de garde en 513 à une valeur prédéterminée, qui peut être différente de celle de la lecture.

En 514, le processeur va délivrer répétitivement l'adresse d'un mot, comme pour la lecture.

L'ensemble de la FONCTION de lecture-mise à jour qui s'effectue ensuite est très proche de la lecture proprement dite, la seule différence étant l'insertion d'une étape 517 qui fait passer le vecteur de protection à "accès permis" pour l'addresse de chaque mot ainsi "visité".

On aura en effet reconnu que les étapes 515, 517 et 518 sont identiques aux étapes 414, 415 et 416, respectivement.

En 519 est prévu ici un contrôle éventuel par le processeur utilisateur. Ce contrôle peut d'ailleurs s'appliquer aussi en lecture proprement dite. Non content de la vérification de la structure, en tant qu'objet, des données contenues dans la mémoire stable, vérification que la mémoire stable prend elle-même en charge, l'utilisateur peut en effet vouloir vérifier d'autres choses quant à la cohérence des données contenues aux emplacements de mémoire visés.

Ensuite, le processeur délivre en 520 une COMMANDE de mise à jour écriture.

La mémoire stable y répond en 521 en vérifiant que la dernière borne de l'objet ou sous-objet a bien été atteinte lors de la procédure précédente de mise à jour lecture. Ensuite, elle effectue, en 522, une initialisation après commande (figure 4B).

Le processeur délivre alors répétitivement, en 523, une adresse et la valeur d'un mot à écrire à cette adresse.

La mémoire y répond par la FONCTION d'écriture-mise-à-jour 502.

Cette procédure comprend à nouveau un contrôle de chaînage 524 (figure 4C).

Ensuite, la mémoire vérifie, en 525, que le vecteur de protection est à "accès permis" pour l'adresse mot$_i$ présentée par le processeur.

Après cette vérification, l'écriture proprement dite s'effectue en 526, puisqu'on inscrit dans le banc B1, à l'adresse mot$_i$, la valeur présentée par le processeur.

L'étape 527 est alors l'incrémentation de chaînage de la figure 4D.

Lorsqu'il estime avoir présenté toutes les adresses correspondant à l'objet (ou sous-objet, etc.), dont il s'agit, le processeur délivre en 528 une COMMANDE de mise à jour recopie.

La mémoire y répond comme précédemment en vérifiant en 529 que l'étape de mise à jour écriture est allée jusqu'à la borne dernière de l'objet ou sous-objet. Elle effectue ensuite, en 530, l'initialisation après commande de la figure 4B.

Le processeur présente ensuite, en 531, une adresse mot$_i$ accompagnée d'un mot quelconque (il s'agit de faire écrire les mémoires, mais le mot présenté n'est pas significatif). Cela est répété bien sûr comme précédemment.

A chaque fois, la mémoire réalise la FONCTION de recopie mise à jour 503, qui commence en 532 par le contrôle de chaînage de la figure 4C.

La recopie proprement dite s'effectue en 533, par l'écriture dans le banc B2, à l'adresse mot$_i$, du contenu du banc B1, que l'on vient d'écrire à la même adresse mot$_i$.

Ensuite, la mémoire effectue, en 534, l'incrémentation de chaînage de la figure 4D, puis, en 535, elle vérifie que le vecteur de protection pour l'adresse mot$_i$ était bien à "accès permis", après quoi elle le fait passer à "accès interdit".

Lorsqu'il estime avoir parcouru toutes les adresses, le processeur délivre en 536 la commande "libre".

La mémoire y répond, en 537, en effectuant le contrôle avant "libre" de la figure 4E, puis désarme le chien de garde en 538.

On ainsi décrit les opérations essentielles nécessaires pour une mémoire, à savoir l'écriture et la lecture.

Un autre mode d'écriture, simplifié, est envisageable, notamment à la première inscription du contenu d'un objet (dont la mémoire n'a donc pas de version antérieure).

Les deux phases "mise à jour lecture" et "mise à jour écriture" sont fondues en une seule, dite "mise à jour rapide". Celle-ci est la même que "mise à jour écriture", sauf sur deux points :

- l'étape 521 est supprimée, tandis que l'étape 522 est accompagnée d'un armement du chien de garde pour une temporisation choisie;
- et surtout, l'étape 525 n'est plus une vérification, mais au contraire un passage de VP (mot$_i$) à "accès permis".

La phase "mise à jour recopie" est inchangée.

Comme déjà indiqué, les informations de partition, à savoir les bornes et le vecteur de chaînage, pourraient être inscrites une fois pour toutes par construction, ou encore être révisables par des procédures spéciales, mais très lourdes.

Il a semblé préférable de permettre au processeur utilisateur de créer la structure d'objet, de sous-objet, etc., et de même de pouvoir procéder à des destructions dans cette structure.

On s'intéressera tout d'abord à la création d'objets.

Pour ce type de procédure, il y aura une différence suivant que l'on est ou non au dernier mot d'un objet (ou sous-objet, etc.), et par conséquent à nouveau une différence dans le cas d'un objet (ou sous-objet, etc.) constitué d'un seul mot.

Cette situation amène, pour simplifier, à introduire des branchements conditionnels dans le mécanisme décrit, alors que la représentation du genre Pascal utilisée est en principe exclusive de tels branchements.

Egalement pour simplifier, les interventions du processeur ont été numérotées par des numéros d'ordre cerclés, auxquels on fera référence dans la présente description en les mettant entre parenthèses.

La première intervention du processeur, notée 611, est un niveau d'accès N, accompagnée d'une COMMANDE qui est "création d'objet" s'il s'agit d'un objet à plusieurs mots, ou "création-fin-objet" s'il s'agit d'un objet à un seul mot.

La mémoire y répond par une étape 612 qui est à nouveau l'initialisation après commande de la figure 4B, suivie en 613 de l'armement du chien de garde.

A chaque adresse mot$_i$ présentée en 615 par le processeur (dans le cas d'un objet à plusieurs mots), la mémoire répond par une FONCTION 601 de création d'objet.

En 616, elle vérifie qu'aucune borne n'a été posée pour le niveau N concerné, à l'adresse mot$_i$.

S'il s'agit du premier mot, l'étape 617 place une borne correspondante dans le vecteur de borne B, à l'adresse mot$_i$ et au niveau N concernés, puis met P à FAUX.

S'il s'agit du premier niveau, l'étape 617 initialise à la valeur zéro l'indicateur de chaînage CI.

Dans le cas contraire, l'étape 618 donne à cet indicateur de chaînage la valeur déjà établie pour le vecteur C, à l'adresse mot$_i$, lors du premier niveau où N était égal à 1.

On admet maintenant que l'on n'est plus au premier mot.

Si l'on n'est pas au premier niveau (celui des objets), l'étape 619 vérifie qu'une borne première a bien été posée au niveau supérieur.

Si l'on est au contraire au premier niveau, l'étape 620 vérifie que la valeur du vecteur de chaînage C à l'adresse mot$_i$ est un "mot libre", c'est-à-dire qu'elle n'a encore fait l'objet d'aucune inscription, après quoi on lui donne la valeur de l'indicateur de chaînage CI.

Dans le cas où l'on n'était pas au premier niveau, l'étape 621 vérifie que le chaînage précédemment établi au premier niveau est respecté.

L'étape 622 réalisé ensuite l'incrémentation de chaînage de la figure 4D. Après cela, l'étape 623 place le vecteur de protection à "accès permis" pour l'adresse mot$_i$.

Par la suite, le processeur délivre en 630 la COMMANDE "création-fin-objet". On a pu venir ici directement s'il s'agissait d'un objet ou d'un sous-objet à un seul mot.

La mémoire y répond simplement en 631 en faisant passer cette commande dans le registre d'état.

Le processeur délivre, en 632, l'adresse de ce dernier mot.

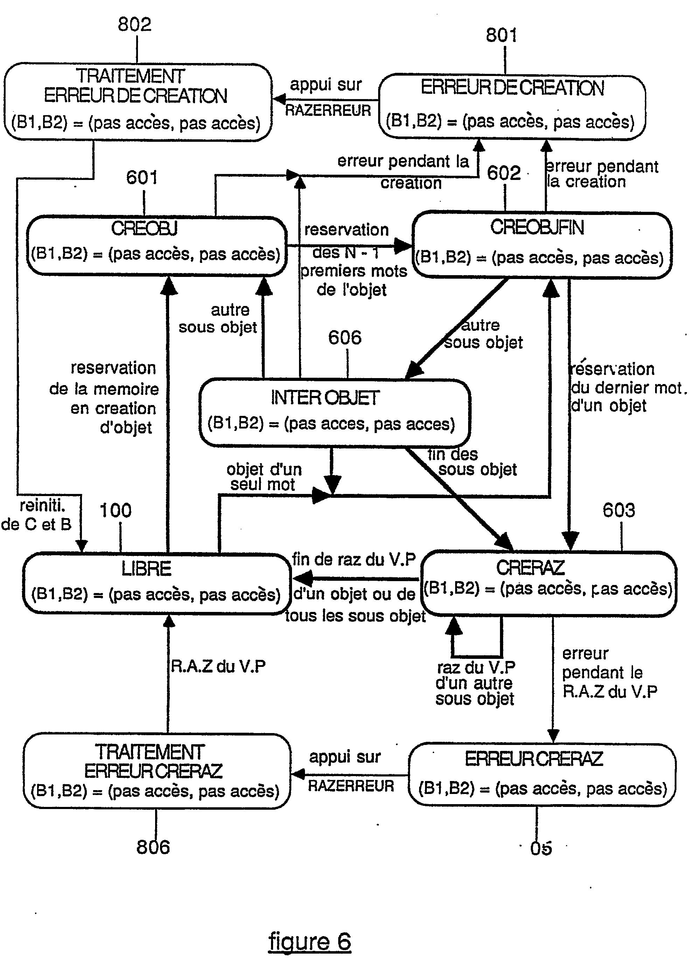

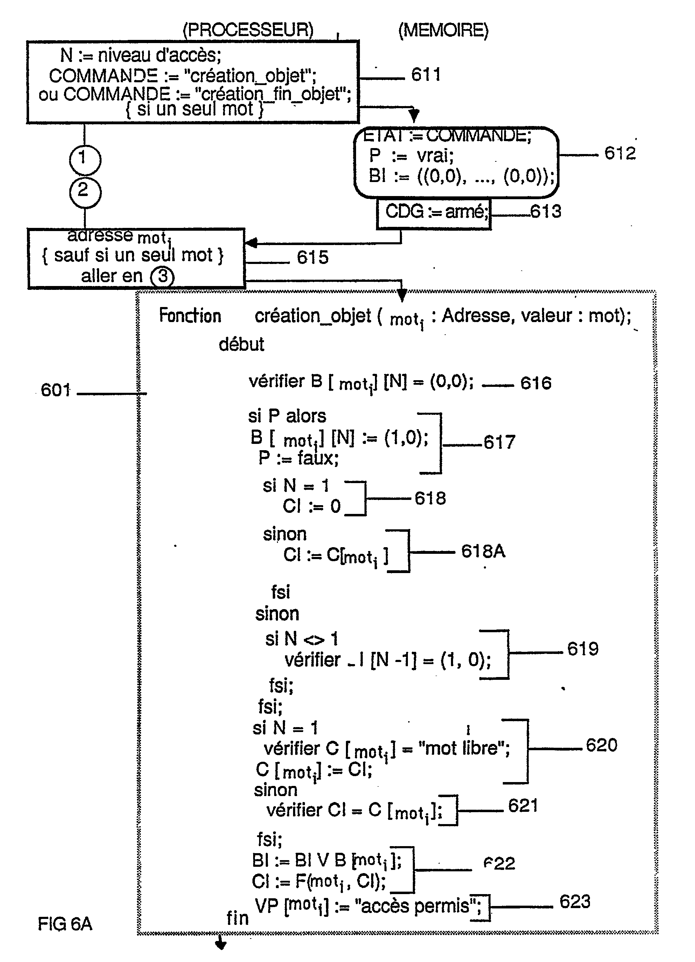

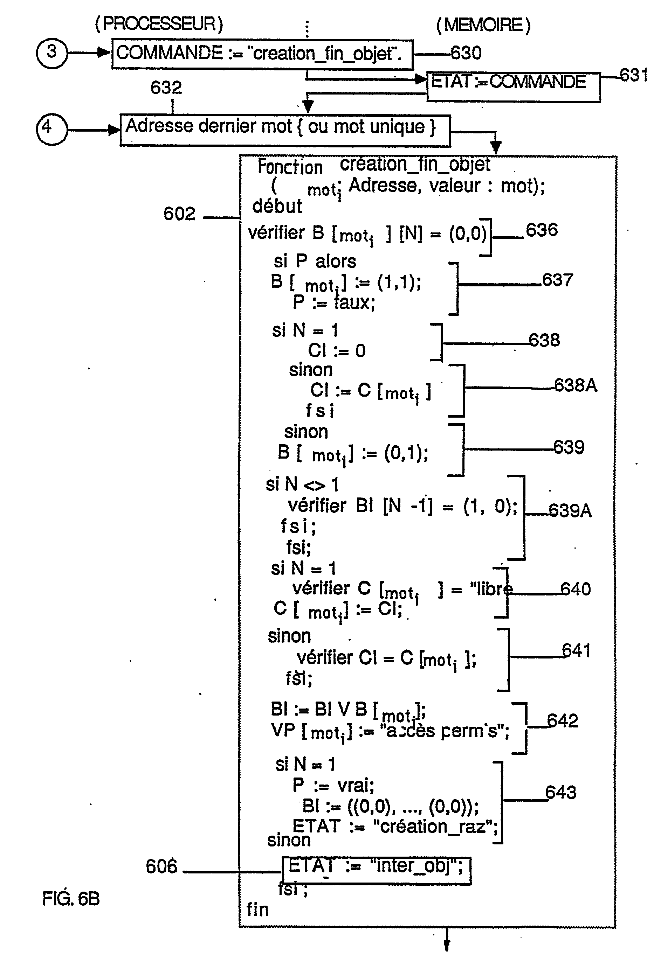

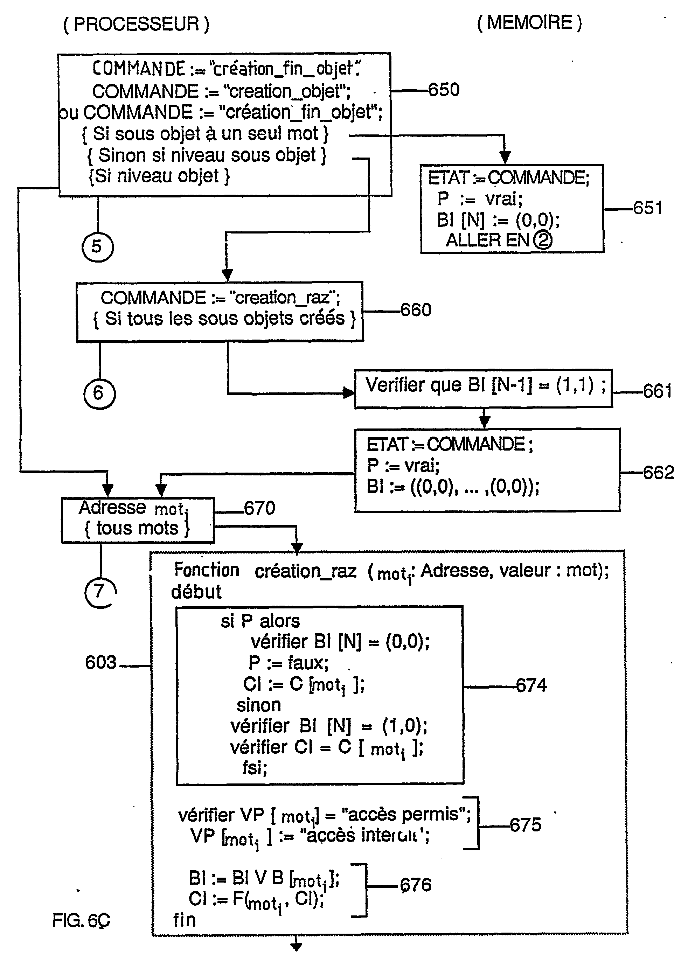

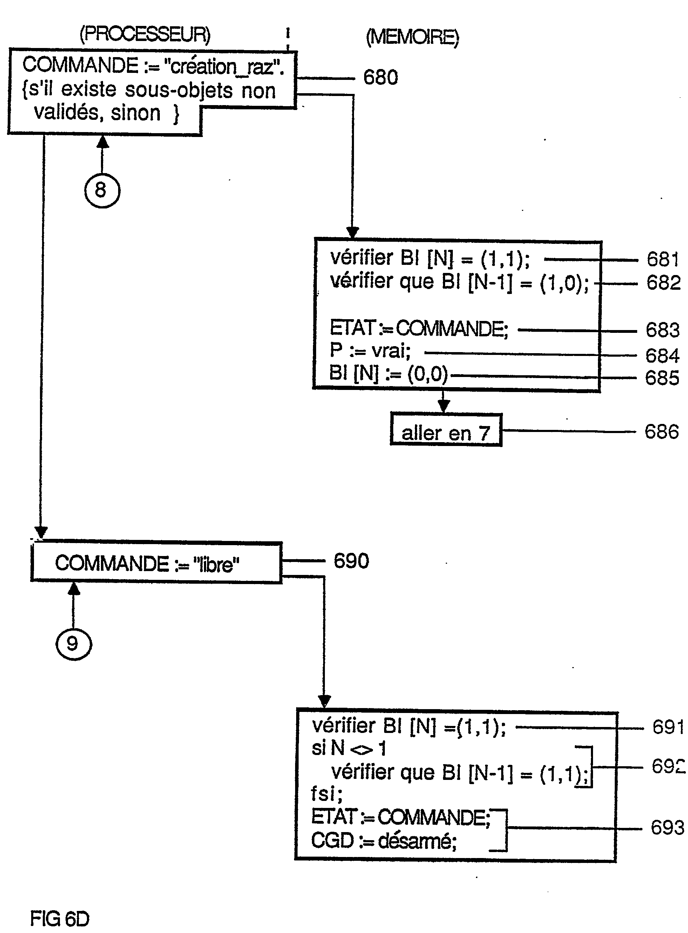

La mémoire y répond par une FONCTION 602 (figure 6) dite "création-fin-objet".

L'étape 636 est la même que l'étape 616.

L'étape 637 diffère de l'étape 617 en ce qu'on place une borne de fin dans le vecteur B.

Les étapes 638 et 638A sont identiques aux étapes 618 et 618A.

Si le dernier mot n'était pas aussi le premier, l'étape 639 place simplement une borne de fin dans le vecteur B.

L'étape 639A est identique à l'étape de la figure 6A.

De même, l'étape 640 est identique à l'étape 620, l'étape 641 à l'étape 621, et l'étape 642 correspond à la réunion des étapes 622 et 623, avec suppression de la mise à jour de l'indicateur de chaînage, inutile pour un dernier mot.

Après cela, une étape 643 examine si l'on est au premier niveau, et s'il s'agit du premier et du dernier mot du premier niveau, auquel cas on remet à zéro le registre de borne courante BI, et l'on établit l'état "création-RAZ".

Dans les autres cas, on établit en 606 un état inter-objet (inter-objet), qui correspond (figure 6) au cas où l'on est à un niveau de sous-objet, d'autres sous-objets étant à définir. Cet état n'est qu'un état transitoire, qui sera suivi, soit de la création d'autres sous-objets, soit d'un passage en création-RAZ.

Ce que va faire ensuite le processeur dépend de différentes conditions. S'il reste des sous-objets à créer, l'étape 650 définit la COMMANDE création-objet ou création-fin-objet, si le sous-objet suivant n'a qu'un seul mot.

La suite en 651 consiste en une phase proche de l'initialisation après commande de la figure 4B, sauf que la dernière ligne ne remet à zéro que la partie du registre BI qui correspond au niveau N où l'on se trouve (avec N différent de 1). Ensuite, on retourne en (2), c'est-à-dire à l'étape 615.

S'il ne reste pas de sous-objets à créer, deux cas peuvent se présenter :
- on est au niveau sous-objet, auquel cas on passe à l'étape 660 ou (6).
- On est au niveau objet, auquel cas l'état "création-RAZ" a déjà été engendré en 643, et l'on passe à l'étape 670 ou (7).

L'étape 660 consiste à engendrer la COMMANDE création-RAZ pour un sous-objet.

En 661, la mémoire vérifie que l'on a bien atteint la borne dernière du niveau supérieur, c'est-à-dire que le dernier sous-objet du niveau en cours a bien été créé.

Après cela, on retrouve en 662 l'initialisation après commande de la figure 4B.

Le processeur en vient maintenant à l'étape 670, à laquelle il a pu aussi accéder depuis 650.

Il s'agit maintenant de vérifier la correction de la structure d'objets et de sous-objets créée dans la mémoire stable.

En 670, le processeur va donc présenter les adresses $mot_i$ de tous les mots.

A chaque fois, la mémoire répond par une FONCTION création-RAZ 603.

Son début 674 est le contrôle de chaînage de la figure 4C.

L'étape 675 vérifie ensuite que le vecteur de marquage VP était bien à "accès permis", pour le faire passer immédiatement à "accès interdit".

L'étape 676 est maintenant l'incrémentation de chaînage de la figure 4D.

A l'étape 680, le processeur doit maintenant présenter à nouveau la commande création-RAZ, du moins s'il existe des sous-objets non validés. Dans le cas contraire, on pourra passer directement à l'étape 690.

L'étape 681 consiste à vérifier que, pour ce sous-objet, on est passé de la première borne à la dernière borne. L'étape 682 vérifie que la première borne a été posée au niveau supérieur, et non la dernière.

Après cela, l'étape 632 prend en compte la commande dans le registre d'état, l'étape 684 fait passer le registre P à VRAI, l'étape 685 remet à zéro le registre BI, à l'adresse en cours, pour le niveau N concerné seulement. Ensuite, l'étape 686 retourne à l'étape 670, c'est-à-dire en (7).

Enfin, le processeur émet en 690 la COMMANDE "libre".

La mémoire y répond en vérifiant que les deux bornes ont été posées pour le niveau en cours, à l'étape 691. Si l'on était à un niveau autre que le premier (celui des objets, elle vérifie qu'il en était de même au(x) niveau(x) précédent(s), à l'étape 692.

Enfin, en 693, la mémoire retourne à l'état libre et désarme le chien de garde.

Il est utile d'observer que ce mode "création d'objets" fait usage du vecteur de marquage VP, non pas pour écrire véritablement dans la mémoire, mais bien simplement pour marquer les points de la mémoire où l'on aura procédé à une création, et vérifier ensuite que cette création est homogène, après quoi les marques sont effacées.

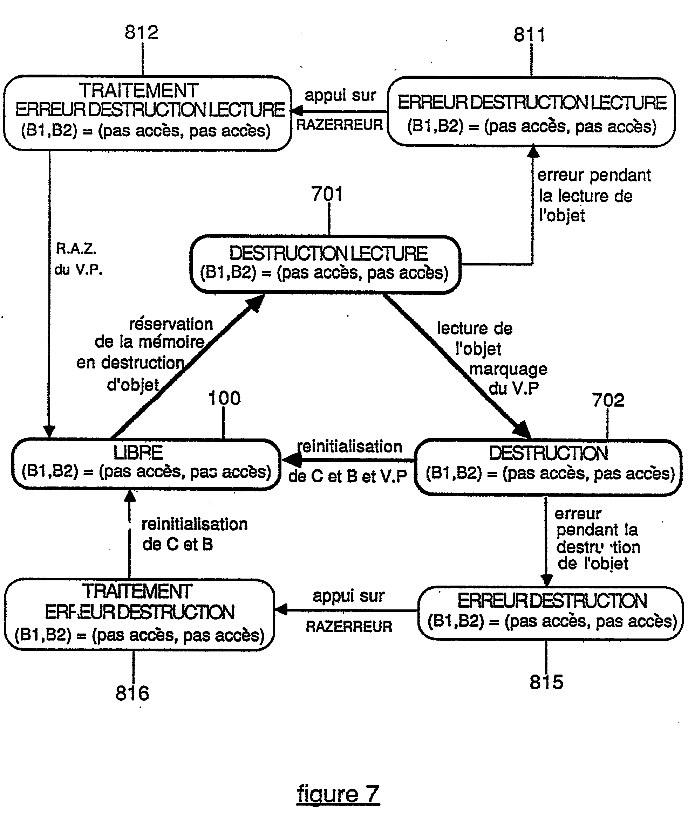

Le mécanisme de destruction d'objet, qui peut être décrit en référence à la figure 7, est relativement plus simple.

Il est comparable aux deux premières phases de l'écriture décrites à propos des figures 5A et 5B, auxquelles il sera également fait référence.

En effet, il comporte une phase 701 de destruction-lecture comparable à la mise à jour-lecture 501, et une phase 702 de destruction proprement dite comparable à la mise à jour-écriture 502.

Hormis le fait que la commande est "destruction-lecture", la seule différence avec la mise à jour-lecture réside en ce que l'étape 512 d'initialisation après commande est précédée d'une vérification que N=1, c'est-à-dire que l'on est au premier niveau, car il est actuellement considéré comme préférable de ne pas détruire un sous-objet.

La FONCTION destruction-lecture elle-même est exactement identique à la FONCTION lecture-mise à jour 501 (fig.5A).

Ensuite, on passe directement à une COMMANDE "destruction" qui remplace la COMMANDE 520 de mise à jour-écriture.

La suite est une FONCTION "destruction", qui commence par un contrôle de chaînage comme celui désigné en 524 de la FONCTION écriture-mise à jour.

Ensuite, après avoir, dans un équivalent de l'étape 525, vérifié que le vecteur de marquage VP est à "accès permis", on le fait passer immédiatement à "accès interdit".

L'étape d'écriture 526 est bien sûr sautée, et l'on passe directement à l'incrémentation de chaînage 527.

Par contre, sont insérées maintenant deux phases dont la première consiste à détruire les bornes contenues dans la mémoire vecteur B à l'adresse mot$_i$, et la seconde consiste à mettre le vecteur de chaînage C à "mot libre" pour l'adresse mot$_i$.

Ensuite, le processeur écrit : commande = "libre" et l'on termine comme sur la figure 5B ou la figure 4A.

On décrira maintenant différents mécanismes auxiliaires qui apparaissent sur les figures 4, 5, 6 et 7.

Le premier est l'initialisation de la mémoire, illustrée en 480 sur la figure 4.

Elle consiste simplement, pour chaque adresse-mot indice i :
- à mettre à "accès interdit" le vecteur de marquage VP,
- à mettre à "mot libre" le vecteur de chaînage C,
- à mettre à "zéro" tous les couples que comporte à cette adresse le vecteur de borne B.

La suite s'effectue par commande : = "libre" comme précédemment. Cette étape finale ne sera pas décrite pour ce qui suit.

Une erreur lors de cette procédure se traduit par le passage à l'erreur fatale 150.

Une erreur due au mécanisme peut se produire pendant la lecture 400 proprement dite. Cela est différent du fait que l'on obtient deux lectures non concordantes dans les deux bancs, et qui fait passer à l'erreur fatale 150.

S'il s'agit simplement d'une erreur de mécanisme, l'appui sur un bouton-poussoir RAZERR par un usager (personne physique) ou bien l'émission d'une commande analogue par le processeur utilisateur suffit pour un retour direct à l'état libre 100.

Sur la figure 5, une erreur peut se produire pendant la phase 501 de mise à jour lecture. On passe alors à l'état erreur d'ouverture noté 570, pour laquelle il n'y a plus aucun accès aux bancs B1 et B2. L'activation de RAZERR permet de passer à l'état 571 du traitement de l'erreur d'ouverture.

Ce traitement est très simple, puisqu'il suffit d'explorer toutes les adresses mot$_i$ de la mémoire, et de faire passer pour chacune le vecteur de marquage VP à "accès interdit".

On retourne ensuite à l'état libre, sauf en cas d'erreur pendant l'état 571, auquel cas on passe à l'erreur fatale 150 (représentée deux fois sur la figure 5 pour clarifier les liaisons).

Si une erreur se produit pendant la phase de mise à jour d'écriture 502, ou pendant la phase de mise à jour rapide 505, on passe à l'état d'erreur d'écriture 573 sur le banc B1, état transitoire pendant lequel les deux bancs sont sans accès.

L'appui sur RAZERR permet de passer au traitement 574 de cette erreur.

A nouveau, le processeur va parcourir tous les mots de la mémoire.

Pour chaque adresse mot$_i$, le processeur ne fait rien si le vecteur de marquage VP est à accès interdit; dans le cas contraire, il commande l'écriture à l'adresse en cours, dans le banc B1, du mot que contient déjà le banc B2. Après cela, le vecteur de marquage VP est remis à "accès interdit" pour l'adresse mot$_i$.

De même, un état d'erreur 576 peut se produire pendant la mise à jour recopie 503.

Après appui sur RAZERR, on passe au traitement 577 de cette erreur de recopie. Le traitement est le même qu'à l'état 574, sauf que c'est ici le banc B2 que l'on va recopier dans le banc B1, à chaque adresse mot$_i$ pour laquelle le vecteur de marquage VP était à "accès permis".

Il est maintenant fait référence à la figure 6, pour ce qui concerne les erreurs intervenues lors de la création des objets.

Qu'il s'agisse de l'état 601 ou de l'état 602 de la fig. 6, on observe que seuls les mots qui ont leur vecteur de marquage VP à "accès permis" ont subi une modification de leur vecteur de borne B et de leur vecteur de chaînage C.

Dans l'un ou l'autre cas, on passe à l'état d'erreur de création 801, suivi de l'état 802 de traitement de l'erreur de création. Dans les deux états, l'accès est interdit aux bancs B1 et B2.

Le traitement de l'erreur de création peut être décrit fonctionnellement comme suit. Tous les mots de la mémoire sont explorés. A chaque adresse mot$_i$,
- si le vecteur de protection est à "accès interdit" pour cette adresse, rien n'est fait,
- sinon, si l'on est au premier niveau, le vecteur de chaînage C est mis à "mot libre" pour l'adresse mot$_i$,
- si le vecteur de marquage VP était à "accès permis", quel que soit le niveau, le vecteur de borne B pour le niveau concerné est remis à zéro, ce qui s'écrit :

$$B(mot_i)(N) := (0,0)$$

après cela, le vecteur de marquage VP est remis à "accès interdit" pour l'adresse mot$_i$, et ainsi de suite.

L'état 606 inter-objets, s'il est le siège d'une erreur, fait l'objet du même traitement par les états 801 et 802.

Reste l'état de vérification après création, c'est-à-dire l'état 603 noté CRE RAZ.

On passe à l'état ERREUR CRE RAZ 805, suivi, après excitation de RAZERR, d'un traitement correspondant 806.

Ce traitement consiste simplement à parcourir tous les mots de la mémoire, en remettant le vecteur de

EP 0 228 329 B1

marquage VP (mot$_i$) à "accès interdit", chaque fois qu'il est à "accès permis". Plus simplement, on peut procéder à une remise à zéro totale du vecteur de marquage VP.

Il est maintenant fait référence à la figure 7, pour ces traitements d'erreurs.

A partir de l'état destruction-lecture 701, on passe, en cas d'erreur, à l'état 811. Après excitation de RAZERR, intervient le traitement de cette erreur à l'état 812. Là encore, il suffit d'effectuer une remise à "accès interdit", dans le cas présent à zéro, du vecteur de marquage VP, soit adresse par adresse, soit globalement, si la mémoire utilisée le permet.

Une erreur peut aussi se produire pendant l'état de destruction 702, ce que fait passer en 815, puis en 816 après excitation de RAZERR.

Le traitement fait alors intervenir un parcours de toutes les adresses mémoire mot$_i$ :

- rien n'est fait si le vecteur de marquage VP (mot$_i$) est à "accès interdit",
- dans le cas contraire, le vecteur de chaînage C(mot$_i$) est mis à "libre", le vecteur de borne B(mot$_i$) est mis à ((0,0),....,(0,0)); ce qui consiste à remettre à zéro toutes les marques de bornes; enfin, le vecteur de marquage VP(mot$_i$) est remis à "accès interdit".

Il est également possible de prévoir un état d'erreur à l'état libre (110 sur figure 4). Le traitement consiste simplement en l'activation de RAZERR, puis en le retour à l'état libre.

Reste maintenant le traitement d'une erreur fatale, qui est tout à fait différent de celui des autres erreurs.

On rappelle qu'il y a deux manières de parvenir à une erreur fatale. La première est le cas où la lecture donne deux mots différents sur les deux bandes mémoire, ce que l'on appelle une lecture non concordante. La seconde est d'arriver à une erreur pendant la reprise, c'est-à-dire le traitement d'une erreur normale.

Comme les deux bancs de mémoire sont gérés en recouvrement, c'est-à-dire adressés de façon identique et synchrone, il est impossible d'y accéder simultanément. En erreur fatale, deux états seront nécessaires pour le traitement, c'est-à-dire la reprise avec erreur, chacun de ces états permettant de lire dans l'un des bancs. Ensuite, pour sortir de l'erreur fatale, il faudra faire une remise à zéro générale de la carte mémoire stable.

Là encore, toutes les adresses mot$_i$seront présentées par e processeur, qui :

- lit d'abord le banc B1 pendant l'état 151;
- lit ensuite le banc B2 pendant l'état 152;
- se met ensuite en attente, avec la possibilité de faire autant de transitions que désiré entre les états 151 et 152.

Un usager (personne physique) devra alors en principe intervenir pour déterminer quelle version des données mises en mémoire est la bonne. Il appuiera ensuite sur le bouton-poussoir RAZGEN.

Dans certains cas, il est concevable que le processeur utilisateur puisse déterminer la bonne version des données par des contrôles logiciels, et que ce soit donc le processeur lui-même qui donne l'ordre de remise à zéro générale.

Dans ce qui précède, on a décrit une mémoire stable rapide qui admet une gestion suivant des structures d'objets et de sous-objets très variables.

Bien entendu, la même mémoire peut aussi être gérée par zones stables, de taille fixe. Ceci peut se faire, par exemple, par positionnement d'un interrupteur sur la carte. Les traitements d'erreurs seront les mêmes que pour le mode normal.

Les mécanismes de lecture sont considérablement simplifiés, puisque, sur la figure 4A, on enlève les deux dernières lignes de l'étape 411, toute l'étape 414, toute l'étape 416, et la première ligne de l'étape 418.

L'écriture se fait, pour sa part, sur la base du mécanisme de mise à jour rapide. La procédure est très simple :

- transformation de la commande en état et armement du chien de garde,
- passage du vecteur de marquage VP à "accès permis" et inscription du mot à écrire dans le banc B1 à l'adresse mot$_i$ présentée par le processeur (répétitivement),
- passage à la commande de mise à jour recopie simplifiée, prise en compte par transfert dans le registre d'état,
- recopie de chaque mot de B1 dans el banc B2, puis retour du vecteur de marquage VP à "accès interdit", pour chaque adresse mot$_i$ (répétitivement),
- commande libre avec passage en état et désarmement du chien de garde.

On décrira maintenant plusieurs améliorations au dispositif de l'invention.

La première amélioration porte sur la possibilité d'authentifier les objets lors d'une mise à jour (normale ou rapide). Ceci est mis en oeuvre par la comparaison du premier mot de chaque objet avec une clé stockée dans un registre CLE AUTHENT. Cette authentification est effectuée si un registre AUTHENT est positionné à vrai (valeur à déterminer). Dans le cas contraire les algorithmes de mise à jour restent les mêmes. Le registre AUTHENT est accessible en écriture seulement dans l'état LIBRE.

A cet effet, le bloc 414 (figure 4C) est modifié comme suit : avant "sinon", on ajoute :

si AUTHENT = vrai alors (vérification éventuelle de la clé)
vérifier B1 (mot$_i$) = B2 (mot$_i$) = CLE AUTHENT
fsi

Cette modification vaut essentiellement pour les fonctions "lecture-mise à jour" (bloc 515) et "mise à jour rapide".

Le seconde amélioration consiste en l'ajout de primitives de mise à jour de groupes d'objets (mise à jour rapide, ou bien avec prélecture). Lors de la première étape de la mise à jour, les objets sont marqués et ccmptés. Lors des étapes suivantes, on recompte le nombre d'objets pour vérifier que tous les objets ont été mdofiés.

De plus, le niveau d'accès de chacun des objets peut être différents des autres. Ceci impose la création d'un tableau BN, mémorisant le niveau d'accès à chaque objet. Lors de la première étape de la mise à jour, les éléments de BN correspondants aux premiers mots des objets sont marqués avec le niveau d'accès courant (N). Lors des étapes suivantes une vérification de ce niveau est effectué.

Il y a donc un ajout de deux compteurs NOBLU, et NOBECR qui respectivement comptent et décomptent le nombre d'objets, et un tableau BN de même taille que la mémoire.

Le mécanisme utilisé est décrit ci-après, dans le cas d'une mise à jour avec prélecture (précédemment appelée "mise-à-jour-lecture").

1e) Le processeur écrit:
```
     N: = niveau d'accès;
     COMMANDE: = "groupe lecture"
La mémoire exécute:
     ETAT: = COMMANDE;
     P: = vrai;
     BI: = ((0,0), ..., (0,0));
     NOBLU: = 0;
     CDG: = armé;
On a les droits d'accès (B1, B2) = (lecture, lecture).
```

2e) Le processeur lit tous les mots de la précédente version de l'objet. A chaque accès, la mémoire exécute:
```
fonction groupe lecture (moti: Adresse, var valeur: mot);
     début
        si P alors                                    {vérification de l'invariant}
           vérifier BI [N] = (0,0);                   {pas début, pas fin}
           P: = faux:
           si AUTHENT = vrai alors                    {vérification éventuelle de la clé}
              vérifier B1 [moti] = B2 [moti] = CLE AUTHENT
           fsi
           BN [moti]: = N;                            {mémorisation du niveau}
           CI: = C [moti];                            {initialisation du chaînage}
        sinon
           vérifier BI [N] = (1,0):                   {début, pas fin}
           vérifier CI = C [moti];                    {vérification du chaînage}
        fsi;
        valeur: =
           si (B1 [moti] = B2 [moti])
              alors B1 [moti]
           sinon ETAT: = "erreur fatale";
           fsi
        VP [moti]: = "accès permis".                  {init du vecteur de protection}
        BI: = BI V B [moti];
     CI: = F(moti, CI);
   fin
```

3e) Le processeur écrit: COMMANDE: = "groupe inter lecture".
```
Le mémoire exécute:
     vérifier BI [N] = (1,1);
     NOBLU: = NOBLU + 1;
     Autoriser l'écriture N pour cet état;
     ETAT: = COMMANDE;
On a les droits d'accès (B1, B2) = (accès interdit, accès interdit).
S'il y a un autre objet à lire aller en 4, sinon aller en 5.
```

4e) Le processeur écrit:
```
     N: = Niveau d'accès;
     COMMANDE: = "groupe lecture";
```

La mémoire exécute:
    ETAT: = COMMANDE;
    P: = vrai;
    BI: = ((0,0), ..., (0,0));
On a les droits d'accès (B1, B2) = (lecture, lecture).

5e) Le processeur écrit:
    N: = Niveau d'accès;
    COMMANDE: = "groupe écriture";
La mémoire exécute:
    ETAT: = COMMANDE;
    P: = vrai;
    BI: = ((0,0), ..., (0,0)),
    NOBECR: = NOBLU;
On a les droits d'accès (B1, B2) = (écriture, accès interdit).

6e) Le processeur écrit tous les mots de la nouvelle version de l'objet. A chaque accès, la mémoire exécute:
    fonction groupe écriture (mot$_i$: Adresse, valeur: mot):
    début
    si P alors                    {vérification de l'invariant}
      vérifier BI [N] = (0,0);        {pas début, pas fin}
      P: = faux;
      vérifier BN [mot$_i$] = N;      {vérification du niveau d'accès}
      CI: = [mot$_i$];            {initialisation du chaînage}
    sinon
      vérifier BL [N] = (1,0);        {début, pas fin}
      vérifier CI = C [mot$_i$];     {vérification du chaînage}
    fsi;
      vérifier VP [mot$_i$] = "accès permis";
      B1 [mot$_i$]: = valeur;
      BI: = BI V B [mot$_i$];
      CI: = F(mot$_i$, CI);
    fin

7e) Le processeur écrit: COMMANDE: ="groupe inter écriture".
La mémoire exécute:
    vérifier BI [N] = (1, 1);
    ETAT: = COMMANDE;
    Autoriser l'écriture dans N pour cet état;
    NOBECR: = NOBECR- 1;
On a les droits d'accès (B1, B2) = (accès interdit, accès interdit).
Si il y a un autre objet à écriture aller n 8, sinon aller en 9.

8e) Le processeur écrit:
    N: = niveau d'accès:
    COMMANDE: = "groupe écriture".
La mémoire exécute:
    vérifier NOBECR <> 0;
    ETAT: = COMMANDE;
    P: = vrai;
    BI: = ((0,0), ..., (0,0));
On a les droits d'accès (B1, B2) = (écriture, accès interdit).

9e) Le processeur écrit:
    N: = niveau d'accès:
    COMMANDE: = "groupe recopie".
La mémoire exécute:
    vérivier NOBECR = 0;
    NOBECR: = NOBLU;
    ETAT: = COMMANDE;
    P: = vrai;
    BI: = ((0,0), ..., (0,0));
On a les droits d'accès (B1, B2) = (lecture, écriture).

10e) Le processeur réécrit tous les mots de la nouvelle version de l'objet. A chaque accès, la mémoire exécute:

```
fonction groupe recopie (moti: Adresse, valeur : mot);
    début
        si P alors                              {vérification de l'invariant}
            vérifier BI [N] = (0,0);            {pas début, pas fin}
            P: = faux;
            vérifier BN [moti] = N;             {vérification du niveau d'accès}
            CI: = C [moti];                     {initialisation du chaînage)
        sinon
            vérifier BI [N] = (1,0);            {début, pas fin}
            vérifier CI = C [moti];            {vérification du chaînage}
        fsi;
        B2 [moti]: = B1 [moti];                {recopie locale de l'objet}
        BI: = BI V B [moti];
        CI: = F (moti, CI);
        vérifier VP [moti] = "accès permis";
        VP [moti]: = "accès interdit";         {raz du vecteur de protection}
    fin
```

11e) Le processeur écrit: COMMANDE: = "groupe inter recopie".

La mémoire exécute:
```
    vérifier BI [N] = (1, 1);
    ETAT: = COMMANDE;
    NOBECR: = NOBECR −1;
    Autoriser l'écriture dans N pour cet état;
```
On a les droits d'accès (B1, B2) = (accès interdit, accès interdit).
Si il y a un autre objet à recopier, aller en 12, sinon aller en 13.

12e) Le processeur écrit:
```
    N: = niveau d'accès;
    COMMANDE: = "groupe recopie".
```
La mémoire exécute:
```
    vérifier NOBECR <> 0;
    ETAT:= COMMANDE;
    P: = vrai;
    BI: = ((0,0), ..., (0,0));
```
On a les droits d'accès (B1, B2) = (lecture, écriture).

13e) Le processeur écrit:
```
    COMMANDE = "libre"
```
La mémoire exécute:
```
    vérifier NOBECR = 0
    ETAT = COMMANDE;
    CD= désarmé;
```
On a les droits d'accès (B1, B2) = (accès inderdit, accès inderdit).

On prévoit naturellement un mécanisme de mise à jour rapide d'un groupe d'objets (sans prélecture). Il présente, par rapport au mécanisme ci-dessus, les mêmes simplifications que précédemment, lors du passage de la "mise-à-jour-lecture" à la "mise à jour rapide". En bref :
- la première commande, dite "groupe-rapide) donne des droits d'accès :
(B1, B2) = (écriture, accès interdit)
on écrit dans B1 tous les mots de la nouvelle version de l'objet.
- la seconde commande dite "groupe-inter-rapide" est construite comme "groupe-inter-lecture", sauf qu'il s'ensuit éventuellement une écriture dans B1, avec les droits d'accès correspondants.
- la troisième commande "groupe-recopie" est la même que précédemment.
Pour les deux mécanismes qui viennent d'être décrits, les états d'erreurs et les reprises associées sont les mêmes que pour la mise à jour d'un objet.

16

## ANNEXE A1

| CODE EXECUTE PAR LE PROCESSEUR 1 | CONTROLES ACTIVES PAR LE FILTRE 20 |
|---|---|
| COMMANDE = "maj-lecture" | Vérification que la transition (libre,maj-lecture) est valide<br>ETAT = COMMANDE |
| pour tous les mots de<br>l'objet faire<br>REG = MEM(adr)<br>fait | A chaque accès le filtre vérifie :<br>VC(adr) = PMOT<br>et génère la fonction lecture |
| COMMANDE = "maj-écriture" | Vérification que la transition (maj-lecture,maj-écriture)<br>est valide<br>ETAT = COMMANDE |
| pour tous les mots de<br>l'objet faire<br>MEM(adr) = REG<br>fait | A chaque accès le filtre vérifie :<br>VC(adr) = PMOT<br>et génère la fonction écriture<br>sur le banc 1 |
| COMMANDE = "maj-recopie" | Vérification que la transition (maj-écriture,maj-recopie)<br>est valide<br>ETAT = COMMANDE |
| pour tous les mots de<br>l'objet faire<br>MEM(adr) = REG<br>fait | A chaque accès le filtre vérifie :<br>VC(adr) = PMOT<br>et génère la fonction recopie<br>du banc 1 sur le banc 2 |
| COMMANDE = "libre" | Vérification que la transition (maj-recopie,libre) est valide<br>ETAT = COMMANDE |

17

## ANNEXE A2

| ETAT | ACCES B1 | ACCES B2 |
|------|----------|----------|
| LIBRE | INTERDIT | INTERDIT |
| LECTURE | LECTURE | LECTURE |
| M.A.J.-LECTURE | LECTURE | LECTURE |
| M.A.J.-ECRITURE | ECRITURE | INTERDIT |
| M.A.J.-RECOPIE | LECTURE | ECRITURE |
| M.A.J.-RAPIDE | ECRITURE | INTERDIT |
| CREATION-OBJET | INTERDIT | INTERDIT |
| CREATION-FIN-OBJET | INTERDIT | INTERDIT |
| CREATION-RAZ | INTERDIT | INTERDIT |
| DESTRUCTION-LECTURE | LECTURE | LECTURE |
| DESTRUCTION | INTERDIT | INTERDIT |
| ERREURS | INTERDIT | INTERDIT |
| TRAIT$^T$ ERR MAJ LEC | INTERDIT | INTERDIT |
| TRAIT$^T$ ERR MAJ ECR | ECRITURE | LECTURE |
| TRAIT$^T$ ERR MAJ REC | LECTURE | ECRITURE |
| TRAIT$^T$ ERR CREATION | INTERDIT | INTERDIT |
| TRAIT$^T$ ERR CRERAZ | | |
| TRAIT$^T$ ERR DES LEC | INTERDIT | INTERDIT |
| TRAIT$^T$ ERR DESTR | INTERDIT | INTERDIT |
| TRAIT$^T$ ERREUR FATALE-1 | LECTURE | INTERDIT |
| TRAIT$^T$ ERREUR FATALE-2 | INTERDIT | LECTURE |

## ANNEXE A3

## TABLE DE VERITE DE V POUR UN NIVEAU

| V | 0,0 | 0,1 | 1,0 | 1,1 |
|---|-----|-----|-----|-----|
| 0,0 | ERREUR | ERREUR | 1,0 | 1,1 |
| 0,1 | ERREUR | ERREUR | ERREUR | ERREUR |
| 1,0 | 1,0 | 1,1 | ERREUR | ERREUR |
| 1,1 | ERREUR | ERREUR | ERREUR | ERREUR |

**Revendications**

1.- Dispositif électronique du type mémoire stable rapide (2), comprenant :
- des interfaces (30) d'adresse, d'entrée/sortie de données et d'instructions d'écriture et lecture, susceptibles d'être directement connectées à un processeur extérieur (1),
- un premier et un second ensembles indépendants de mémoire vive non volatile (51,52), possédant des entrées d'adresse, des entrées de commande d'écriture/lecture, et des entrées/sorties de données, et
- des moyens de contrôle d'accès (20) reliés d'une part aux interfaces d'adresse ainsi que de commande d'écriture/lecture, d'autre part aux entrées d'adresse et de commande d'écriture/lecture des deux ensembles de mémoire, afin de n'autoriser l'accès qu'à une partie désignée des deux ensembles de mémoire, à chaque fois pour une opération désignée de lecture ou d'écriture, l'autorisation étant détruite après l'adressage de cette partie de mémoire,
caractérisé en ce que les moyens de contrôle d'accès (20) comprennent un contrôleur logique, associé à
une première mémoire auxiliaire non volatile (VC;230,240), destinée à contenir des informations de partition propres à décomposer identiquement chacun des ensembles de mémoire selon au moins un niveau de sous-ensembles disjoints, dits objets,
et en ce que le contrôleur logique (20) décompose chaque demande d'accès à la mémoire par le processeur extérieur en un ou plusieurs états actifs d'accès, dans chacun desquels il vérifie que la suite des adresses appliquées aux ensembles de mémoire couvre un sous-ensemble (ou objet) complet, tel que défini par les informations de partition, toute anomalie se traduisant par le passage du contrôleur logique en état d'erreur.

2.- Dispositif selon la revendication 1, caractérisé en ce qu'il comporte un organe commutateur (40) possédant au moins :
un état de transfert où il interconnecte les entrées/sorties du premier ensemble de mémoire avec l'interface d'entrée/sortie de données, et
un état d'échange où il interconnecte les entrées/sorties de données des deux ensembles de mémoire, et

en ce que le contrôleur logique (20) possède un état libre, où il peut recevoir une commande d'écriture ou de lecture du processeur extérieur,

un état actif de lecture, accessible directement de l'état libre en réponse à une commande de lecture,

un état actif d'écriture dans l'un des ensembles de mémoire où il place l'organe commutateur dans son état de transfert,

un état actif de recopie de l'un dans l'autre des ensembles de mémoire, où il place l'organe commutateur dans son état d'échange, ainsi qu'au moins un état d'erreur,

l'exécution d'une commande d'écriture en provenance du processeur extérieur impliquant le passage par l'état d'écriture, puis par l'état de recopie, avant tout retour à l'état libre.

3.- Dispositif selon la revendication 2, caractérisé en ce qu'il est associé au contrôleur logique une seconde mémoire auxiliaire (220), vive et non volatile, formant un vecteur de marquage (VP), de même taille que les ensembles de mémoire, adressé comme eux, et dont chaque composante, en son état normal, interdit l'accès pour altération aux mots possédant l'adresse associée à cette composante, dans l'un et l'autre de ces deux ensembles de mémoire, et en ce que, en réponse à une commande d'écriture du processeur extérieur, le contrôleur logique (20) active le vecteur de marquage (VP) avant l'écriture dans le premier ensemble de mémoire, sélectivement pour la suite des adresses demandées, qu'il vérifie selon lesdites informations de partition, puis ramène le vecteur de marquage dans son état normal après la recopie du premier ensemble de mémoire dans le second, toute anomalie se traduisant par le passage du contrôleur logique en état d'erreur.

4.- Dispositif selon l'une des revendications 2 et 3, caractérisé en ce que l'organe commutateur (40) possède aussi un état de comparaison des sorties de données respectives des deux ensembles de mémoire, pour indiquer leur concordance au contrôleur logique.

5.- Dispositif selon la revendication 4, caractérisé en ce que, en son état de comparaison, l'organe commutateur (40) effectue un contrôle préalable des sorties respectives des deux ensembles de mémoire, pour y déterminer d'éventuels bits altérés.

6.- Dispositif selon l'une des revendications 4 et 5,

caractérisé en ce que l'exécution d'une instruction d'écriture comprend le passage par un état actif d'ouverture ("mise à jour lecture") durant lequel sont explorés tous les mots constitutifs du sous-ensemble à écrire, et durant lequel s'effectue, pour chacun de ces mots, le changement d'état du vecteur de marquage, et

en ce que l'état de comparaison (44) est mis en oeuvre par le contrôleur logique pendant cet état actif d'ouverture, ce qui permet un contrôle du contenu, en particulier de cohérence, de l'objet par le processeur, avant l'écriture proprement dite.

7.- Dispositif selon l'une des revendications 4 à 6, caractérisé en ce que, dans l'état de lecture, le contrôleur logique (20) autorise la lecture simultanée des deux ensembles de mémoire, la valeur lue n'étant validée que s'il y a concordance entre les sorties de données des deux ensembles de mémoire.

8.- Dispositif selon l'une des revendications précédentes, caractérisé en ce que le contrôleur logique (20) possède

un autre état, dit création d'objet, permettant au processeur de définir lesdites informations de partition, avec le contrôleur logique, et

encore un autre état, dit destruction d'objet, permettant de modifier les partitions existant dans la mémoire, en particulier de supprimer les emplacements d'objets devenus inutiles.

9.- Dispositif selon l'une des revendications précédentes, caractérisé en ce que les informations de partition comprennent des informations de chaînage (C) entre les adresses des mots des ensembles de mémoire, et au moins un jeu d'informations de pointage (B) sur les adresses du premier et du dernier mot de chaque sous-ensemble (objet).

10.- Dispositif selon la revendication 9, caractérisé en ce que les informations de partition comprennent au moins un autre jeu d'informations de pointage permettant de définir dans chaque sous-ensemble (objet) au moins un autre niveau de sous-ensembles (sous-objets).

11.- Dispositif selon l'une des revendications 9 et 10, caractérisé en ce que les informations de chaînage sont codées, en particulier sous une forme tenant compte du nombre de leurs bits à "1".

12.- Dispositif selon la revendication 11, caractérisé en ce que la fonction de codage du chaînage est définie comme la somme du nombre de bits à "1" de sa valeur précédente et du nombre de bits à "1" du pointeur d'adresse du mot précédent.

13.- Dispositif selon l'une des revendications précédentes, caractérisé en ce que la première mémoire auxiliaire (VC;230, 240), pour les informations de partition, comprend au moins une mémoire-vecteur, adressée comme les deux ensembles de mémoire.

14.- Dispositif selon la revendication 13, caractérisé en ce que la première mémoire auxiliaire est une mémoire vive.

15.- Dispositif selon l'une des revendications précédentes, caractérisé en ce qu'il est associé au contrôleur logique (20) des registres de mémoire vive non volatile pour l'adresse de mots en cours demandée par le processeur extérieur (250) et pour les informations de chaînage et de pointage relatives à l'adresse du mot précédent demandé par le processeur extérieur (235,245).

16.- Dispositif selon l'une des revendications précédentes, caractérisé en ce qu'il comporte un registre de commande (205), en mémoire vive et non volatile recevant seul à la fois les adresses et les données du processeur extérieur, par lequel il est directement adressable, et propre à contenir une commande en cours, ainsi qu'un niveau d'accès dans la partition.

17.- Dispositif selon la revendication 16, caractérisé en ce qu'il comporte aussi des registres de mémoire vive, non volatile (215,218), reliés au contrôleur logique, pour des informations d'état et de niveau recopiant le contenu du registre de commande, et pour une information binaire représentative de l'attente d'une première adresse à appliquer à la mémoire après activation du registre d'état.

18.- Dispositif selon l'une des revendications précédentes, caractérisé en ce que le contrôleur logique possède, au moins :
- un état d'erreur d'écriture, suivi de la recopie du contenu du second ensemble de mémoire dans le premier, pour la partie de l'objet ou sous-objet concerné dont le vecteur de marquage est activé;
- un état d'erreur de recopie, suivi d'une répétition de la recopie pour la partie de l'objet ou sous-objet concerné dont le vecteur de marquage est activé.

19.- Dispositif selon la revendication 18 prise en combinaison avec la revendication 6, caractérisé en ce que le contrôleur logique possède aussi un état d'erreur d'ouverture suivi d'une restauration du vecteur de marquage en son état normal.

20.- Dispositif selon l'une des revendications 18 et 19 prise en combinaison avec la revendication 8, caractérisé en ce que le contrôleur logique possède aussi un état d'erreur de création et un état d'erreur de destruction, suivis d'une annulation des informations de partition relatives aux parties de l'objet ou sous-objet concerné dont le vecteur de marquage est activé.

## Claims

1. Electronic device of the high-speed stable memory type (2), comprising:
– address, data input/output and read and write instruction interfaces (30), capable of being connected directly to an external processor (1),
– an independent first and second nonvolatile, random-access memory set (51, 52) possessing address inputs, read/write command inputs, and data inputs/outputs, and
– access control means (20) connected, on the one hand, to the address as well as the read/write command interfaces, and, on the other hand to the address and read/write command inputs of the two memory sets, so as to authorize access to one designated part only of the two memory sets, on each occasion for a designated read or write operation, the authorization being revoked after the addressing of this memory part, characterized in that the access control means (20) comprise a logic controller, associated with
a first nonvolatile auxiliary memory (VC; 230, 240), intended to hold items of partitioning information suitable for identically partitioning each of the memory sets according to at least one level of disjoint subsets, referred to as objects,
and in that the logic controller (20) partitions each memory access request by the external processor into one or more active access states, in each of which the controller verifies whether the sequence of addresses applied to the memory sets covers a complete subset (or object), as defined by the items of partitioning information, any anomaly being reflected in the passing of the logic controller into an error state.

2. Device according to Claim 1, characterized in that it comprises a switch unit (40) possessing at least:
one transfer state in which it interconnects the inputs/outputs of the first memory set with the data input/output interface, and
one exchange state in which it interconnects the data inputs/outputs of the two memory sets, and
in that the logic controller (20) possesses a free state, in which it can receive a read or write command from the external processor,
an active read state, accessible directly from the free state in response to a read command,
an active state of writing into one of the memory sets in which it places the switch unit in its transfer state,
an active state of copying from one memory set to the other, in which it places the switch unit in its exchange state, as well as at least one error state,
the execution of a write command coming from the external processor involving the passing through the write state, then through the copy state, before any return to the free state.

3. Device according to Claim 2, characterized in that, associated with the logic controller, there is a second nonvolatile and random-access auxiliary memory (220), forming a marker vector (VP), of the same size as the memory sets, addressed like them, and each component of which, in its normal state, prohibits access, for the purposes of alteration, to the words possessing the address associated with this component, in both of these two memory sets, and in that, in response to a write command from the external processor, the logic controller (20) activates the marker vector (VP) before writing, selectively for the sequence of requested addresses, into the first memory set, that it verifies in accordance with the said items of partitioning information, then returns the marker vector to its normal state after the copying of the first memory set into the second, any anomaly reflected in the passing of the logic controller into an error state.

4. Device according to one of Claims 2 and 3, characterized in that the switch unit (40) also possesses a state for comparing the respective data outputs of the two memory sets, in order to indicate their agreement with the logic controller.

5. Device according to Claim 4, characterized in that, in its compare state, the switch unit (40) carries out a prior check of the respective outputs of the two memory sets, in order to determine there any possible altered bits.

6. Device according to one of Claims 4 and 5, characterized in that the execution of a write instruction comprises the passing through an active opening state ("reading update") during which all the words constituting the subset to be written are examined, and during which, for each of these words, the changing of the state of the marker vector is carried out, and in that the compare state (44) is implemented by the logic controller during this active opening state, which allows a check of the contents, in particular as regards coherence, of the object by the processor before the write proper.

7. Device according to one of Claims 4 to 6, characterized in that, in the read state, the logic controller (20) authorizes the simultaneous reading of the two memory sets, the value read being validated only if there is agreement between the data outputs of the two memory sets.

8. Device according to one of the preceding claims, characterized in that the logic controller (20) possesses another state, referred to as object creation, allowing the processor to define the said items of partitioning information with the logic controller, and yet another state, referred to as object destruction, allowing modification of the partitions existing in the memory, in particular to clear the sites of objects which have become redundant.

9. Device according to one of the preceding claims, characterized in that the items of partitioning information comprise items of information for chaining (C) the addresses of the words of the memory sets, and at least one string of items of information for pointing (B) to the addresses of the first and of the last word of each subset (object).

10. Device according to Claim 9, characterized in that the items of partitioning information comprise at least one other string of items of information for pointing allowing the definition of at least one other level of subsets (sub-objects) in each subset (object).

11. Device according to one of Claims 9 and 10, characterized in that the items of chaining information are coded, in particular in a form taking into account the number of their "1" bits.

12. Device according to Claim 11, characterized in that the coding function of the chaining is defined as the sum of the number of "1" bits in its previous value and of the number of "1" bits of the address pointer of the previous word.

13. Device according to one of the preceding claims, characterized in that the first auxiliary memory (VC; 230, 240) for the items of partitioning information comprises at least one memory vector, addressed like the two memory sets.

14. Device according to Claim 13, characterized in that the first auxiliary memory is a random-access memory.

15. Device according to one of the preceding claims, characterized in that nonvolatile, random-access memory registers for the address of words currently requested by the external processor (250) and for the items of chaining and pointing information relating to the address of the previous word requested by the external processor (235, 245) are associated with the logic controller (20).

16. Device according to one of the preceding claims, characterized in that it comprises a command register (205), in nonvolatile and random-access memory, receiving at one and the same time only the addresses and the data from the external processor, by which it is directly addressable, and suitable for holding a current command, as well as an access level in the partition.

17. Device according to Claim 16, characterized in that it also comprises nonvolatile, random-access memory registers (215, 218) connected to the logic controller, for items of information of state and of level copying the contents of the command register, and for an item of binary information representing the standby of a first address to apply to the memory after activation of the state register.

18. Device according to one of the preceding claims, characterized in that the logic controller possesses, at least:

– one write error state followed by the copying of the contents of the second memory set into the first, for the part of the object or sub-object concerned, whose marker vector is activated;

– one copy error state followed by a repetition of the copying for the part of the object or sub-object concerned, whose marker vector is activated.

19. Device according to Claim 18 taken in combination with Claim 6, characterized in that the logic controller also possesses an opening error state followed by a restoring of the marker vector to its normal state.

20. Device according to one of Claims 18 and 19 taken in combination with Claim 8, characterized in that the logic controller also possesses a creation error state and a destruction error state which are followed by a cancellation of the items of partitioning information relating to the parts of the object or sub-object concerned, whose marker vector is activated.

## Patentansprüche

1. Einen schnellen und stabilen Speicher bildende elektronische Vorrichtung (2) mit:
– Adress-, Dateneingangs/-ausgangs- und Schreibbefehl- und Lesebefehlschnittstellen (30), die geeignet sind direkt mit einem äußeren Prozessor (1) verbunden zu werden,
– einer ersten und einer zweiten unabhängigen Anordnung eines lebenden nichtflüchtigen Speichers (51, 52), die Adresseingänge, Schreibbefehl-/Lesebefehlseingänge und Datenein-/-ausgänge aufweist, und
– Zutrittssteuerungseinrichtungen (20), die einerseits mit den Adressschnittstellen sowie den Schreib-/Leseschnittstellen, andererseits mit den Adress- und Schreib-/Lesesteuereingängen der beiden Speicheranordnungen verbunden sind, um den Zutritt nur bei einem bestimmten bzw. bezeichneten Bereich der beiden Speicheranordnungen zu erlauben, jedesmal für einen bestimmten bzw. bezeichneten Lese- oder Schreibvorgang, wobei die Erlaubnis zerstört wird nach der Adressierung dieses Speicherbereichs, dadurch gekennzeichnet, daß die Zutrittssteuerungseinrichtungen (20) einen logischen Kontrolleur oder Logikcontroller aufweisen, der verbunden ist mit einem ersten nichtflüchtigen Hilfsspeicher (VC; 230, 240), der dazu bestimmt ist, Verteilinformationen zu enthalten, die geeignet sind, identisch jede Speicheranordnung gemäß wenigstens einem Niveau von entkoppelten Unteranordnungen, genannt Objekten, zu zerlegen, und daß der logische Kontrolleur (20) jede Zungangsanfrage zu dem Speicher durch den äußeren Prozessor in ein oder mehrere aktive Zugangszustände zerlegt, in denen er jeweils verifiziert, daß die Folge der auf die Speicheranordnung aufgebrachten Adressen eine Unteranordnung (oder Objekt) komplett deckt, wie sie durch die Verteilinformationen definiert ist, wobei die Anomalie sich durch das Hindurchpassieren des logischen Kontrolleurs in einen Fehlerzustand übersetzt.

2. Vorrichtung nach Anspruch 1, dadurch gekennzeichnet, daß sie ein Schaltorgan (40) aufweist, das wenigstens aufweist:
einen Übertragungszustand, wo sie die Eingänge/Ausgänge der ersten Speicheranordnung mit der Eingangs-/Ausgangsschnittstelle der Daten verbindet, und
einen Austauschzustand, wo sie die Dateneingänge-/-ausgänge der beiden Speicheranordnungen verbindet, und
daß der logische Kontrolleur (20) einen freien Zustand, wo sie einen Schreib- oder Lesebefehl des äußeren Prozessors empfängt,
einen aktiven Lesezustand, der direkt erreichbar ist vom freien Zustand in Antwort auf einen Lesebefehl,
einen aktiven Schreibzustand in einer der Speicheranordnungen, wo sie das Schaltorgan in seinen Übertragungszustand stellt,
einen aktiven Rückkopierzustand, der einen in die andere der Speicheranordnungen, wo sie das Schaltorgan in seinen Austauschzustand setzt, sowie wenigstens einen Fehlerzustand, aufweist,
wobei die Ausführung eines Schreibbefehls, der von dem äußeren Prozessor stammt, die Passage durch den Schreibzustand, sodann durch den Rückkopierzustand, vor jeglicher Rückkehr zum freien Zustand impliziert.

3. Vorrichtung nach Anspruch 2, dadurch gekennzeichnet, daß dem logischen Kontrolleur ein zweiter Hilfsspeicher (220), lebend und nicht flüchtig, zugeordnet ist, der einen Markierungsvektor (VP) von der gleichen Größe wie die Speicheranordnungen, angesteuert wie diese bildet, und von dem jede Komponente in ihrem Normalzustand den Zugang für eine Änderung der den Wörtern, die die Adresse besitzen, die dieser Komponente zugeordnet ist, in der einen und der anderen der beiden Sprechanordnungen, und daß in Antwort auf einen Schreibbefehl des äußeren Prozessors, der logische Kontrolleur (20) den Markierungsvektor (VP) vor dem Schreiben in die erste Speicheranordnung aktiviert, selektiv für die Folge der gefragten Adressen, er gemäß den Verteilinformationen verifiziert, sodann den Markierungsvektor nach der Rückkopie der ersten Speicheranordnung in die zweite in seinen Normalzustand zurückbringt, wobei jegliche Anomalie durch das Hindurchtreten durch den logischen Kontrolleur sich als Fehlerzustand übersetzt.

4. Vorrichtung nach Anspruch 2 oder 3, dadurch gekennzeichnet, daß das Schaltorgan (40) ebenfalls einen Vergleichszustand der Datenausgänge entsprechend den beiden Speicheranordnungen aufweist, um ihre Übereinstimmung dem logischen Kontrolleur anzuzeigen.

5. Vorrichtung nach Anspruch 4, dadurch gekennzeichnet, daß in seinem Vergleichszustand das Schaltorgan (40) eine Vorkontrolle der entsprechenden Ausgänge der beiden Speicheranordnungen duchführt, um hier evtl. veränderte Bits zu bestimmen.

6. Vorrichtung nach einem der Ansprüche 4 oder 5, dadurch gekennzeichnet, daß die Ausführung einer Schreibinstruktion den Hindurchtritt durch einen aktiven Öffnungszustand ("mise à jour lecture", Fortschreibungslesen) aufweist, während dem alle die konstitutiven Wörter der Unteranordnung, die geschrieben werden, abgetastet werden, und während dem für jedes dieser Worte die Änderung des Zustands des Markierungsvektors sich vollzieht, und daß der Vergleichszustand (44) durch den logischen Kontrolleur durchgeführt wird, während diesem aktiven Öffnungszustand, was eine kontinuierliche Steuerung, insbesondere der Übereinstimmung des Objektes durch den Prozessor vor dem Lesen, richtig gesagt, erlaubt.

7. Vorrichtung nach einem der Ansprüche 4 bis 6, dadurch gekennzeichnet, daß in dem Lesezustand der logische Kontrolleur (20) das gleichzeitige Lesen der beiden Speicheranordnungen erlaubt, wobei der gelesene Wert nur bewertet wird, wenn es eine Übereinstimmung zwischen den Datenausgängen der beiden Speicheranordnungen gibt.

8. Vorrichtung nach einem der vorhergehenden Ansprüche, dadurch gekennzeichnet, daß der logische Kontrolleur (20) einen weiteren Zustand genannt Objekterzeugung aufweist, der dem Prozessor erlaubt die genannten Verteilinformationen mit dem logischen Kontrolleur zu definieren, und noch einen weiteren Zustand, genannt Objektzerstörung aufweist, der erlaubt, die in dem Speicher existierenden Verteilungen zu modifizieren, insbesondere die Plätze der unnütz gewordenen Objekte zu entfernen.

9. Vorrichtung nach einem der vorhergehenden Ansprüche, dadurch gekennzeichnet, daß die Verteilinformationen Verknüpfungsinformationen (C) zwischen den Adressen von Wörtern der Speicheranordnungen aufweisen, und wenigstens einen Satz von Ausrichtinformationen (B) auf die Adressen des ersten und des letzten Wortes einer jeden Unteranordnung (Objekt) aufweisen.

10. Vorrichtung nach Anspruch 9, dadurch gekennzeichnet, daß die Verteilinformationen wenigstens einen weiteren Satz von Ausrichtinformationen aufweisen, die erlauben in jeder Unteranordnung (Objekt) wenigstens ein anderes Niveau von Unteranordnungen (Unterobjekten) zu definieren.

11. Vorrichtung nach einem der Ansprüche 9 oder 10, dadurch gekennzeichnet, daß die Verknüpfungsinformationen codiert sind, insbesondere unter einer Form, die der Anzahl ihrer Bits auf "1" Rechnung trägt.

12. Vorrichtung nach Anspruch 11, dadurch gekennzeichnet, daß die Funktion der Verknüpfungscodierung definiert ist wie die Summe der Anzahl der Bits auf "1" ihres vorhergehenden Wertes und der Anzahl der Bits auf "1" des Adressenverfolgers des vorhergehenden Wortes.

13. Vorrichtung nach einem der vorhergehenden Ansprüche, dadurch gekennzeichnet, daß der erste Hilfsspeicher (VC; 230, 240) für die Verteilinformationen wenigstens einen Speichervektor aufweist, der wie die beiden Speicheranordnungen adressiert ist.

14. Vorrichtung nach Anspruch 13, dadurch gekennzeichnet, daß der erste Hilfsspeicher ein lebender Speicher ist.

15. Vorrichtung nach einem der vorhergehenden Ansprüche, dadurch gekennzeichnet, daß sie dem Logikcontroller (20) der Register des nichtflüchtigen Lebendspeichers zugeordnet ist für die Adresse der laufend durch den äußeren Prozessor (250) geforderten Worte, und für die Informationen der Verknüpfung und Ausrichtung bezogen auf die Adresse des vorhergehenden Wortes, das von dem äußeren Prozessor (235, 245) gefordert wird.

16. Vorrichtung nach einem der vorhergehenden Ansprüche, dadurch gekennzeichnet, daß sie ein Befehlsregister (205) als lebenden und nichtflüchtigen Speicher aufweist, der nur gleichzeitig die Adressen und die Daten des äußeren Prozessors empfängt, durch den er direkt adressierbar ist, und geeignet ist einen laufenden Befehl sowie nur ein Zutrittsniveau in der Verteilung zu enthalten.

17. Vorrichtung nach Anspruch 16, dadurch gekennzeichnet, daß sie auch lebende nichtflüchtige Speicherregister (215, 218) aufweist, die mit dem Logikcontroller verbunden sind, für Informationen des Zustands und des Niveaus, das den Inhalt des Befehlsregisters rückkopiert und für eine binäre Information, die dem Erwarten einer ersten Adresse entspricht, die auf den Speicher nach Aktivierung des Zustandsregisters aufzubringen ist.

18. Vorrichtung nach einem der vorhergehenden Ansprüche, dadurch gekennzeichnet, daß der Logikcontroller wenigstens aufweist:
— einen Schreibfehlerzustand, folgend auf die Rückkopierung des Inhalts der zweiten Speicheranordnung in die erste, für den betreffenden Bereich des Objekts oder Unterobjekts, für den der Markierungsvektor aktiviert ist;
— einen Rückkopierfehlerzustand, folgend auf eine Wiederholung der Rückkopierung für den betrachteten Bereich des Objekts oder Unterobjekts, von dem der Markierungsvektor aktiviert ist.

19. Vorrichtung nach Anspruch 18 in Verbindung mit Anspruch 6, dadurch gekennzeichnet, daß der Logikcontroller auch einen Öffnungsfehlerzustand gefolgt auf eine Wiederherstellung des Markierungsvektors in seinen Normalzustand aufweist.

20. Vorrichtung nach einem der Ansprüche 18 oder 19 in Kombination mit Anspruch 8, dadurch gekennzeichnet, daß der Logikcontroller auch einen Erzeugungsfehlerzustand und einen Zerstörungsfehlerzustand aufweist gefolgt auf eine Vernichtung von Verteilinformationen bezogen auf Bereiche des betrachteten Objekts oder Unterobjekts, von denen der Markierungsvektor aktiviert ist.

# FIG.1

# FIG. 2

**VECTEUR DE CHAINAGE**

**BANCS DE MEMOIRE**

51 et 52

| premier | pre/der |
|---|---|

PMOT

| premier |
|---|
| dernier |

| premier |
|---|
| dernier | dernier |

| forme |
|---|

| place X |
|---|
| place X |

| place Y |
|---|
| place Y |

objet    ss/objets

# FIG. 2A

80

( DEMANDE D'ACCES
MEMOIRE )

81

CHERCHER VC POUR
ADRESSE DEMANDEE

82

VC = PMOT
(ADRESSE PRECEDENTE)
?

NON → ERREUR

OUI

83

AUTORISER ACCES
PMOT:=adresse demandée

SUITE

FIG. 3

EP 0 228 329 B1

# FIG.3A

BUS ADRESSE

MEMOIRE ADRESSE EN COURS

$mot_i$

C 240

$F(mot_{i-1})C(mot_{i-1})$

$mot_i$

B 230

$((0,0),(0,0),(0,0))$

$mot_i$

V.P 220

1/0

$mot_i$

B1 51

valeur mot

$mot_i$

B2 52

valeur mot

310

ECR 320

LEC 330

300 310

REGISTRE COMMANDE 205

REGISTRE ETAT 210

LOGIQUE DE COMMANDE 200

N 215

P 218

CI 245

CALCUL DE F 260

BI 235

ECR 320 321

ECR 281 322 291 328

ECR 282 323 292 329

LEC 330

LEC 330

324

325

326

327

ETATS: MAJ ECRITURE
MAJ RAPIDE
+TRAIT. ERR. ASSOCIES

ETATS: MAJ RECOPIE
ET SON TRAITEMT
ERREUR

ETATS: LECTURE
MAJ LECTURE
MAJ RECOPIE
DEST. LECTURE
TRAIT. ERR. MAJ. RECOP.
TRAIT. ERR. FATALE 1

ETATS: LECTURE
MAJ LECTURE
MAJ ECRITURE
MAJ RAPIDE
DEST. LECTURE
TRAIT. ERR. MAJ. ECRIT.
TRAIT. ERR. FATALE 2

EP 0 228 329 B1

figure 4

EP 0 228 329 B1

(PROCESSEUR)                    (MEMOIRE)

N := niveau d'accès;   ——— 410
  COMMANDE := "lecture";

ETAT := COMMANDE;   ——— 411
 P  := vrai;
 BI := ((0,0), ..., (0,0));

CDG := armé;   ——— 412

adresse $mot_i$   ——— 413

Fonction   lecture ($mot_i$ : Adresse, var valeur : mot);
début

si P alors
  vérifier BI [N] = (0,0);
  P := faux;
 CI := C [$mot_i$];   ——— 414
  sinon
 vérifier  BI [N] = (1,0);
 vérifier CI = C [ $mot_i$];
  fsi;

—15

valeur := si (B1 [$mot_i$] = B2 [$mot_i$]) alors B1 [$mot_i$]
                sinon ETAT := "erreu fatale";

BI := BI V B [$mot_i$];   ——— 416
CI := F($mot_i$ , CI);

fin

COMMANDE := "libre".   ——— 417

vérifier BI [N] = (1, 1);   ——— 418
ETAT := COMMANDE;

CDG := désarmé;   ——— 419        FIG 4A

INITIALISATION APRES COMMANDE

411 —

```
ETAT := COMMANDE;
      P := vrai;
BI := ((0,0),...,(0,0));
```

FIG 4B

CONTROLE DE CHAINAGE

414 —

```
 si P alors
vérifier BI [N] = (0,0);
   P := faux;
CI := C [moti];
  sinon
vérifier BI [N] = (1,0);
vérifier C = C [moti];
  fsi;
```

FIG 4C

INCREMENTATION CHAINAGE

416 —

$$BI := BI \ V \ B[mot_i];$$
$$CI := F(mot_i, CI);$$

FIG 4D

CONTROLE AVANT "LIBRE"

418 —

```
vérifier BI [N] = (1,1);
ETAT := COMMANDE;
```

FIG 4E

577    erreur pendant la recopie de l'objet sur le banc 2    150

TRAITEMENT
ERREUR DE RECOPIE SUR B2    appui sur    ERREUR FATALE
(B1,B2)=(lecture, écriture)    RAZERREUR    (B1,B2)=(pas accès,pas accès)

576

recopie de
l'objet de    ERREUR DE RECOPIE SUR B2
B1 sur B2    (B1,B2)=(pas accès,pas accès)

erreur
pendant la
503    recopie

recopie de l'objet
de B1 sur B2    M.A.J RECOPIE    écriture de l'objet
(B1,B2)=(lecture,écriture)    sur le banc 1

marquage du V. P.
505    écriture de l'objet
sur le banc 1

M.A.J RAPIDE
(B1,B2)=(écriture ,pas accès)    502

100    réservation en
mise à jour rapide    M.A.J ECRITURE
LIBRE    (B1,B2)=(écriture,pas accès)
(B1,B2)=(pas accès,pas accès)

erreur pendant
l'écriture de
marquage du V. P,lecture    573    l'objet
de l'objet et contrôle de
cohérence    ERREUR D'ECRITURE SUR B1
501    (B1,B2)=(pas ac ès,pas accès)

réservation
de la mémoire
en mise à jour    M.A.J LECTURE
(B1,B2)=(lecture,lecture)

erreur à
l'ouverture de    appui sur
570    l'objet    RAZERREUR

ERREUR D'OUVERTURE
150    (B1,B2)=(pas accès,pas accès)    574

ERREUR FATALE    TRAITEMENT
(B1,B2)=(pas accès,pas accès)    571    appui sur    ERREUR D'ECRITURE SUR B1
RAZERREUR    (B1,B2)=(écriture,lecture)

erreur pendant    TRAITEMENT
la r.a.z du V. P.    ERREUR D'OUVERTURE
(B1,B2)=(pas accès,pas accès)

r.a.z du vecteur    erreur pendant
de protection    la recopie du banc

recopie du banc
B1 sur le banc B2

figure 5

EP 0 228 329 B1

(PROCESSEUR) | (MEMOIRE)

```
N := niveau d'accès;
COMMANDE := "m.a.j lecture";          ——511
```

( INITIALISATION APRES COMMANDE )——512

```
CGD := armé ——513
```

```
adresse  mot_i ——514
```

501 ——

```
Fonction   lecture_maj ( mot_i : Adresse, var valeur : mot);
début
```

( CONTROLE DE CHAINAGE )——515

```
valeur :=
      si (B1 [ mot_i] = B2 [mot_i])
      alors B1 [ mot_i]
         sinon ETAT := "erreur fatale";      ——516
      fsi
```

```
VP [mot_i] := "accès permis". ——517
```

( INCREMENTATION CHAINAGE )—— 518

```
fin
```

```
CONTROLE EVENTUEL PAR
      PROCESSEUR                      ——519
```

```
COMMANDE := "m.a.j écriture". ——520
```

```
vérifier B1 [N] = (1,1); —— 521
```

( INITIALISATION APRES COMMANDE )——522

```
adresse mot_i , valeur : mot ——523
```

502 ——

```
Fonction  écriture_maj ( mot_i Adresse , valeur : mot);
debut
```

( CONTROLE DE CHAINAGE )——524

```
vérifier VP [ mot]="accès permis"; ——525
```

```
B1 [mot_i] := valeur; ——526
```

( INCREMENTATION CHAINAGE )——527

FIG 5A                                  fin

( PROCESSEUR )                    ( MEMOIRE )

COMMANDE := "m.a.j recopie". —— 528

vérifier BI [N] = (1, 1); —— 529

INITIALISATION APRES COMMANDE —— 530

Adresse $mot_i$ , mot vide —— 531

503 ——

Fonction   recopie_maj ( $mot_i$ : Adresse, valeur : mot);
début

CONTROLE DE CHAINAGE —— 532

B2 [$mot_i$] := B1 [$mot_i$ ]; —— 533

INCREMENTATION CHAINAGE —— 534

vérifier VP [ $mot_i$]= "accès permis";
 VP [ $mot_i$ ] := "accès interdit"; —— 535

fin

COMMANDE := " libre". —— 536

CONTROLE AVANT LIBRE —— 537

CDG := désarmé; —— 538

FIG. 5B

figure 6

EP 0 228 329 B1

(PROCESSEUR)          (MEMOIRE)

```
N := niveau d'accès;
COMMANDE := "création_objet";
ou COMMANDE := "création_fin_objet";
      { si un seul mot }
```
———— 611

①
②

```
ETAT := COMMANDE;
P   := vrai;
BI  := ((0,0), ..., (0,0));
```
———— 612

CDG := armé;  ——613

```
adresse mot_i
{ sauf si un seul mot }
aller en ③
```
———— 615

```
Fonction     création_objet ( mot_i : Adresse, valeur : mot);
        début

            vérifier B [ mot_i] [N] = (0,0); ——— 616

            si P alors
            B [ mot_i] [N] := (1,0);        ——617
             P := faux;

              si N = 1
                 CI := 0        ——— 618

              sinon
                 CI := C[mot_i ]    ——— 618A

               fsi
            sinon
              si N <> 1
                 vérifier _I [N -1] = (1, 0);    ——— 619
               fsi;
             fsi;
            si N = 1
              vérifier C [ mot_i] = "mot libre";   ——— 620
             C [ mot_i] := CI;
            sinon
               vérifier CI = C [ mot_i];    ——— 621
             fsi;
            BI := BI V B [mot_i];     ——— 622
            CI := F(mot_i, CI);
            VP [mot_i] := "accès permis";    ——— 623
        fin
```

601 ————

FIG 6A

(PROCESSEUR)                 ⋮                 (MEMOIRE)

③ ──▶ COMMANDE := "creation_fin_objet". ───630

ETAT := COMMANDE ───631

632

④ ──▶ Adresse dernier mot { ou mot unique }

```
Fonction  creation_fin_objet
    (   mot_i Adresse, valeur : mot);
  début
602 ── vérifier B [mot_i] [N] = (0,0) ──636

     si P alors
     B [mot_i] := (1,1);           ──637
        P := faux;

     si N = 1
          CI := 0                  ──638
       sinon
          CI := C [mot_i]          ──638A
          f s i
       sinon
       B [mot_i] := (0,1);         ──639

     si N <> 1
        vérifier BI [N -1] = (1, 0);  ──639A
       fsi;
        fsi;
     si N = 1
        vérifier C [mot_i] = "libre  ──640
     C [mot_i] := CI;
     sinon
        vérifier CI = C [mot_i];     ──641
       fsi;

     BI := BI V B [mot_i];
     VP [mot_i] := "accès perm's";   ──642

     si N = 1
        P := vrai;
         BI := ((0,0), ..., (0,0));   ──643
        ETAT := "création_raz";
     sinon
606 ── ETAT := "inter_obj";
        fsi ;
  fin
```

FIG. 6B

( PROCESSEUR )  ( MEMOIRE )

COMMANDE := "création_fin_objet";
COMMANDE := "creation_objet"; ——650
ou COMMANDE := "création_fin_objet";
{ Si sous objet à un seul mot }
{ Sinon si niveau sous objet }
{Si niveau objet }

⑤

ETAT := COMMANDE;
P := vrai;
BI [N] := (0,0); ——651
ALLER EN ②

COMMANDE := "creation_raz";
{ Si tous les sous objets créés } ——660

⑥

Verifier que BI [N-1] = (1,1) ; ——661

ETAT := COMMANDE ;
P := vrai; ——662
BI := ((0,0), ... ,(0,0));

Adresse $mot_i$ ——670
{ tous mots }

⑦

Fonction création_raz ( $mot_i$: Adresse, valeur : mot);
début

603 ——

si P alors
vérifier BI [N] = (0,0);
P := faux;
CI := C [ $mot_i$ ]; ——674
sinon
vérifier BI [N] = (1,0);
vérifier CI = C [ $mot_i$ ];
fsi;

vérifier VP [ $mot_i$] = "accès permis";
VP [ $mot_i$ ] := "accès interdit"; ——675

BI := BI V B [ $mot_i$ ];
CI := F( $mot_i$ , CI); ——676
fin

FIG. 6C

(PROCESSEUR)　　　　　　　　　(MEMOIRE)

COMMANDE := "création_raz".
{s'il existe sous-objets non
validés, sinon }　　　　　　　— 680

⑧

vérifier BI [N] = (1,1);　　— 681
vérifier que BI [N-1] = (1,0);　— 682

ETAT := COMMANDE;　　— 683
P := vrai;　　　　　　— 684
BI [N] := (0,0)　　　— 685

aller en 7　　— 686

COMMANDE := "libre"　　— 690

⑨

vérifier BI [N] =(1,1);　— 691
si N <> 1
　vérifier que BI [N-1] = (1,1);　— 692
fsi;
ETAT := COMMANDE;
CGD := désarmé;　　— 693

FIG 6D

812

811

TRAITEMENT
ERREUR DESTRUCTION LECTURE
(B1,B2) = (pas accès, pas accès)

appui sur
RAZERREUR

ERREUR DESTRUCTION LECTURE
(B1,B2) = (pas accès, pas accès)

erreur pendant
la lecture de
l'objet

701

R.A.Z.
du V.P.

DESTRUCTION LECTURE
(B1,B2) = (pas accès, pas accès)

réservation
de la mémoire
en destruction
d'objet

lecture de
l'objet
marquage
du V.P

100

702

LIBRE
(B1,B2) = (pas accès, pas accès)

reinitialisation
de C et B et V.P

DESTRUCTION
(B1,B2) = (pas accès, pas accès)

erreur
pendant la
destru·tion
de l'objet

reinitialisation
de C et B

TRAITEMENT
ERREUR DESTRUCTION
(B1,B2) = (pas accès, pas accès)

appui sur
RAZERREUR

ERREUR DESTRUCTION
(B1,B2) = (pas accès, pas accès)

816

815

<u>figure 7</u>